# EUROPÄISCHE PATENTSCHRIFT

(11) **EP 3 766 661 B1**
(45) Veröffentlichungstag und Bekanntmachung des Hinweises auf die Patenterteilung: **10.11.2021**
(21) Anmeldenummer: 20181906.7
(22) Anmeldetag: 24.06.2020
(51) Int. Cl.: B29C 48/27, B29C 48/14, B29C 48/08, B29C 48/88, B29C 48/92

(54) **VERFAHREN UND VORRICHTUNG ZUR HERSTELLUNG EINES SCHMELZE- UND/ODER KUNSTSTOFFFILMS**
METHOD AND DEVICE FOR PRODUCING A MELT AND / OR PLASTIC FILM
PROCÉDÉ ET DISPOSITIF DE FABRICATION D'UN FEUILLE DE FUSION ET/OU DE MATIÈRE PLASTIQUE

(30) Priorität: 18.07.2019 DE 102019119505
(43) Veröffentlichungstag der Anmeldung: 20.01.2021
(73) Patentinhaber: Brückner Maschinenbau GmbH & Co. KG, 83313 Siegsdorf (DE)
(72) Erfinder: Knoche, Thomas, 83278 Traunstein (DE); Armbruster, Maximilian, 83512 Wasserburg a. Inn (DE); Hoffmann, Andreas, 83071 Stephanskirchen (DE); Frass, Sebastian, 83071 Stephanskirchen (DE); Krippner, Heiko, 83278 Traunstein (DE); Kuhnigk, Steffen, 83334 Inzell (DE)
(74) Vertreter: Flach Bauer Stahl Patentanwälte Partnerschaft mbB

(56) Entgegenhaltungen:
- EP-A1- 3 124 201
- WO-A1-2009/044906
- WO-A2-02/24432
- DE-A1-102011 013 539
- US-A- 3 423 493

## Beschreibung

Die Erfindung betrifft ein Verfahren und eine Vorrichtung zur Herstellung eines Schmelze- und/oder Kunststofffilms nach dem Oberbegriff des Anspruchs 1 bzw. des Anspruchs 10.

Bei der Herstellung von thermoplastischen Flachfolien wird üblicherweise zunächst ein Vorfilm durch eine Breitschlitzdüse extrudiert, der unmittelbar danach auf eine Kühlwalze gelangt und dort erstarrt. Der Gesamtaufbau ist häufig derart, dass die verwendete Kühlwalze zumindest in einer Teilhöhe in einem Kühlbad rotierend angeordnet wird. Der aus der Breitschlitzdüse extrudierte Vorfilm trifft dabei an einer sogenannten parallel zur Rotationsachse der Kühlwalze verlaufenden Anlegelinie auf den Walzenmantel der Kühlwalze. Um hier einen guten Übergang, d.h. einen gleichmäßigen Kontakt, zwischen dem Vorfilm und der Kühlwalze möglichst ohne Einschlüsse zu gewährleisten, kann eine elektrostatische Anlegeeinheit (beispielsweise Pinning-Elektroden) oder ein den Vorfilm an den Walzenmantel andrückendes Luftmesser verwendet werden. Aber auch alle anderen bekannten Anlegemethoden sind grundsätzlich geeignet, beispielsweise die Verwendung einer sogenannten "Touch Roll", eines Glättwerks, eines Walzwerks etc. Es wird insoweit auf bekannte Vorrichtungen verwiesen. Erwähnt werden soll auch, dass bei manchen Prozessen ein Elektroden-Pinning (E-Pinning) beispielsweise nicht möglich ist.

Wenn insoweit auch von einem Kühlbad gesprochen wird, so ist im Sinne der vorliegenden Anmeldung allgemein ein Kühlmedium gemeint, also allgemein eine Kühlflüssigkeit oder ein Flüssigkeitsbad oder Flüssigkeits-Kühlbad, um die Schmelze oder den Vorfilm entsprechend abzukühlen, damit er erstarren kann. Von daher ist auch nicht zwingend Wasser als Kühlfluid notwendig. Es können grundsätzlich auch andere Medien in Betracht kommen oder aber ein Kühlbad, dem andere Medien noch beigemengt sind. Insoweit wird häufig auch davon gesprochen, dass der Film kristallisiert oder erstarrt.

Bei dem erwähnten Vorfilm handelt es sich um einen sogenannten Cast-Film, der eine zähfließende, gelartige Struktur aufweist. Insoweit wird nachfolgend teilweise anstelle von einem Vorfilm oder Cast-Film nur kurz von einer Schmelze oder einem Schmelzefilm gesprochen. Sofern es sich um einen erstarrten Film handelt, wird auch von einem Kunststofffilm gesprochen. Bei einem erstarrten Film handelt es sich häufig um einen auskristallisierten Film. Der Begriff des "Erstarrens" wird damit in Abhängigkeit des verwendeten Polymers definiert.

Bei teilkristallinen Kunststoffen (PE, PP, etc.) kann von einem Erstarren dann gesprochen werden, wenn die Temperatur im Film einen Wert erreicht, bei der die Abkühlung der Schmelze den exothermen Kristallisationspeak komplett durchlaufen hat.

Bei amorphen Kunststoffen liegt ein Erstarren des Films dann vor, wenn die Glasübergangstemperatur unterschritten wird. In beiden vorstehend genannten Fällen erfolgt in der Regel eine Messung der Temperatur durch Verwendung eines DSC, also eines sogenannten "Diffential Scanning Calometry", d.h. einer sogenannten dynamischen Differenz Kalometrie.

Der auf der Kühlwalze erstarrte Film wird dann üblicherweise über eine Vielzahl von Umlenkrollen unter Durchführung einer Wärmebehandlung einer eigentlichen Reckanlage zugeführt, in der der Film dann beispielsweise in Längsrichtung und anschließend in Querrichtung (oder auch umgekehrt) oder simultan in Längs- und Querrichtung gereckt werden kann, um dann am Ende der Reckanlage üblicherweise nach Durchlaufen einer Annealing- oder Nachbehandlungszone an einer Wicklerstation aufgewickelt zu werden.

Zur Herstellung von gereckten Membranfolien für die Filtration, Entsalzung, aber auch als Separatorfolien/Barrierefolien für Akkumulatoren (wie Lithium-Ionen-Akkumulatoren, Lithium-Polymer-Akkumulatoren, oder beispielsweise auch bei Bleibatterien) aus Polymeren wie Polypropylen (PP), Polyethylen (PE), High Density Polyethylen (HDPE), und pulverförmigen UHMWPE (Ultra High Molecular Weight PE), muss das Polymer zur Bildung der Poren vor dem Verstrecken mit einem Plasticizer (wird nachfolgend auch als Solvent, d.h. als Lösemittel bzw. als Weichmacher bezeichnet und kann z.B. auch Paraffinöl etc. beinhalten) homogen vermischt, erhitzt und plastifiziert werden. Der homogen eingearbeitete Plasticizer sorgt dabei dafür, dass sich in dem Polymer Freiräume bilden, die beim anschließenden Verstrecken und Auswaschen bzw. Verdampfen des Plasticizers zur Porenbildung führen. Ziel ist es dabei den Plasticizer in einem Extruder derart homogen und fein im aufzuschmelzendem/aufgeschmolzenem Polymer zu verteilen, dass beim Verstrecken und Auswaschen bzw. Ausdampfen des Plasticizers möglichst viele und feine Poren entstehen.

Standardgemäß werden hierzu gleichlaufende Doppelschneckenextruder verwendet, denen das Polymer mit dem Plasticizer, also dem Lösemittel, in einer vorher homogen angerührten Suspension (Slurry) zugeführt werden. Die Komponenten werden dem Doppelschneckenextruder häufig auch aufgrund der vereinfachten Handhabung einzeln zugeführt. Bei einzelner Zugabe der Komponenten in den Extruder stellt eine homogene Vermischung hohe Ansprüche an die Mischqualität der Extruder. Homogene Mischergebnisse lassen sich in erster Linie durch lange Verweilzeiten, große Mischvolumina und hohe Drehzahlen erreichen. Da bei Drehzahlsteigerungen aufgrund der eingetragenen Friktionswärme nur beschränkt Energie durch den temperierten Zylindermantel abgeführt werden kann, sind nur beschränkte Drehzahlen möglich. Speziell bei Verwendung von UHMWPE mit einem hohen molekularen Gewicht oberhalb von ca. 600.000 g/mol verringert sich der Ausstoß weiter. Ist der Plasticizer, also das Lösemittel entzündlich, verschiebt sich aufgrund des Explosionsschutzes das Verarbeitungstemperaturfenster noch einmal nach unten, so dass die maximal mögliche Drehzahl noch einmal reduziert werden muss, welches aufgrund schlechterer Homogenisierleistung zu einer Ausstoßreduzierung führt. Um im Markt geforderte Ausstöße zu erreichen, müssen Doppelschneckenextruder mit relativ langen Verfahrenslängen von 50-70 L/D (L/D = Verhältnis der Schneckenlänge zum Schneckendurchmesser) eingesetzt werden.

Batterie-Separator-Folien sowie Verfahren zu deren Herstellung sind grundsätzlich bekannt, beispielsweise auch aus der WO 2008/016174 A1.

Dass bei der Herstellung derartiger Batterie-Separator-Folien im Kunststoffmaterial auch beigefügte Plastifizierungsmittel mitverwendet werden, ist beispielsweise auch aus der US 2018/0036930 A1 bekannt.

Aus der EP 0 378 279 B1 ist ein Verfahren zur Herstellung von mikroporösen Folien aus ultrahochmolekularem Polyethylen bekannt. Aus einer homogenen Lösung aus dem erwähnten Polyethylen soll dabei eine Folie gebildet und das Lösungsmittel aus der Folie entfernt werden. Dazu wird ein abdampfbares Lösungsmittel mit einer bestimmten eine Obergrenze nicht überschreitende Viskosität verwendet, so dass das Lösungsmittel aus der Folie bei einer Temperatur unterhalb der Lösungstemperatur des Polyethylens abdampfen kann. Anschließend wir die Folie gereckt, und zwar unter dem Schmelzpunkt des UHMWPE.

Es wird insoweit auch auf die EP 0 160 551 A mit vergleichbarem Inhalt verwiesen.

Ferner soll auch noch auf die WO 99/65093 verwiesen werden, welche den ähnlichen Prozess beschreibt, wonach die Polyethylen umfassende Folie zusätzlich ein abdampfbares Lösungsmittel enthält, welches vor dem Recken der Folie entfernt wird.

Die WO 2012/138398 A1 befasst sich ebenfalls mit der Herstellung einer Batteriefolie befasst, ausgehend von einem thermoplastischen Polymer in einem darin enthaltenen abdampffähigen Lösungsmittel, welches aus der Folie entfernt wird, bevor sie gereckt wird.

Bei der Herstellung derartiger Folien bestehend aus einer Mischung mit zumindest einem Polymer und mindestens einem Plastifizierungsmittel (einem sogenannten Solvent- bzw. Lösungsmittel) ist aber immer wieder festzustellen, dass die endgültig hergestellten Folien nicht stets die gewünschte hohe Folienqualität aufweisen.

Aus der DE 10 2011 013 539 A1 ist eine gattungsbildende Vorrichtung zum Herstellen von Kunststofffolien als bekannt zu entnehmen. Diese Vorrichtung umfasst eine Extrusionsvorrichtung, mit der ein heißer Kunststofffilm aus einer Austrittsdüse auf die Oberfläche einer rotierend antreibaren Kühlwalze aufbringbar ist. Ferner ist zumindest ein Luftansaugstutzen vorgesehen, mit dem Umgebungsluft aus der Umgebung der Kühlwalze abgesaugt werden kann. Um die Absaugung der Umgebungsluft aus der Umgebung der Kühlwalze zu verbessern, wird vorgeschlagen, dass in Rotationsrichtung der Kühlwalze hinter dem Auflagepunkt des Kunststofffilms auf die Kühlwalze eine Zuluftdüse angeordnet ist, mit der ein Zuluftstrom auf die Oberfläche der Kühlwalze zu- und/oder in tangentialer Richtung an der Oberfläche der Kühlwalze vorbeiführbar ist. Dadurch kann die Absaugung von kontaminierter Umgebungsluft verbessert werden.

Schließlich soll auch noch auf die WO 2009/044906 A1 verwiesen werden, die eine Vorrichtung und ein Verfahren zum Schutz beispielsweise von Kunststofffilmen vor einem Kondensationsniederschlag bieten soll. Diese Schutzeinrichtung umfasst eine Platte, die oberhalb der Kühlwalze mit dem auf der Kühlwalze befindlichen Film angeordnet ist. Allerdings hat sich gezeigt, dass es Unterschiede in der Oberflächenmorphologie an dem endgültig hergestellten Kunststofffilm gibt. Es treten zum Teil defekte Stellen auf, die dazu führen, dass die Offenporigkeit und damit die Rauigkeit der Kunststofffolie lokal innerhalb einer Defektstelle größer ist. Eine gute Folie, wie sie insbesondere als Batterie-Separator-Folie (kurz auch BSF-Folie genannt) für Akkumulatoren oder Batterien wie beispielsweise Lithium-Ionen-Akkumulatoren oder -Batterien verwendet werden soll, soll eine gleichmäßige Offenporigkeit und damit ein gleichmäßiges Porennetzwerk mit möglichst wenig undurchlässigen Stellen und Ästen aufweisen.

Bei der Herstellung der entsprechenden vorstehend erläuterten Kunststofffolie hat sich dabei ferner gezeigt, dass außerhalb der auftretenden Defekte die Netzwerkstruktur nur weniger stark ausgeprägt und dabei dichtere Bereiche sichtbar sind. Innerhalb eines Defekts in der Kunststofffolie ist demgegenüber ein stark ausgebildetes, offenporiges Netzwerk sichtbar.

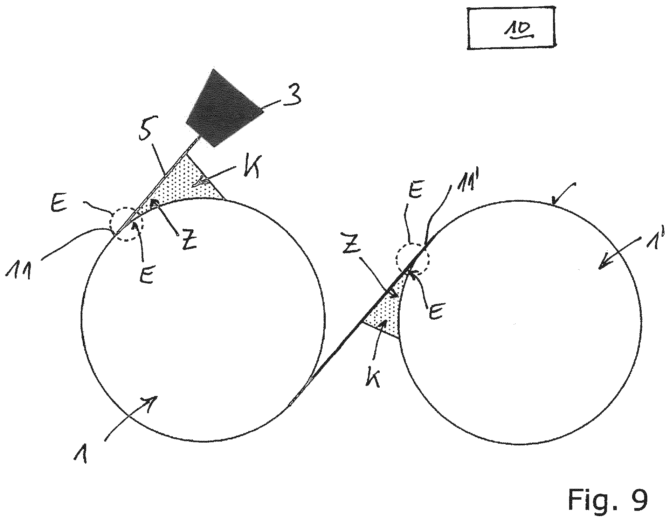

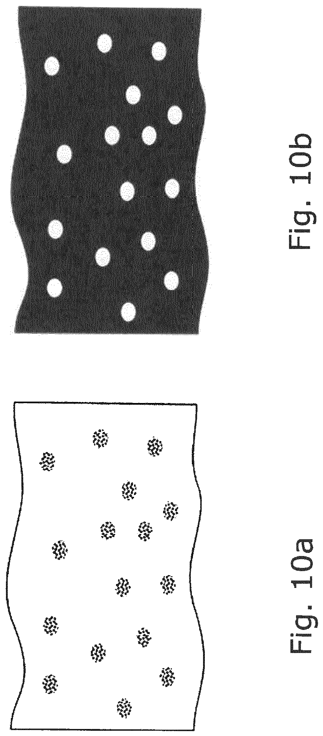

Zusammengefasst lässt sich festhalten, dass ein typisches optisches Erscheinungsbild eines derartigen, mit defekten Stellen versehenen Kunststofffilms eine höhere Oberflächenrauigkeit und einen niedrigeren Glanz an den defekten Stellen aufweist, verbunden mit einer höheren Lichtdurchlässigkeit an diesen defekten Stellen. Dies ist systematisch beispielsweise anhand der Figuren 9a und 9b gezeigt, wobei die beiden Figuren lediglich einen Ausschnitt aus einem Kunststofffolienfilm in Draufsicht wiedergeben. Dabei sind in Figur 10a und Figur 10b die Defektstellen punktförmig eingezeichnet. In der Darstellung gemäß Figur 10a definieren diese punktförmigen Stellen eine höhere Oberflächenrauigkeit und ergeben damit einen niedrigeren Glanz an den Defektstellen. Bei der Darstellung gemäß Figur 10b ist gezeigt, dann an den entsprechenden Defektstellen die Lichtdurchlässigkeit höher ist.

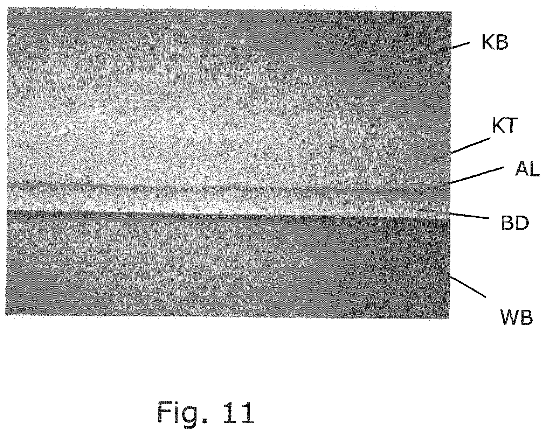

Schließlich ist anhand von Figur 11 eine fotografische ausschnittsweise Darstellung wiedergegeben, die eine Draufsicht auf einen Schmelzefilm zeigt. Dabei ist im oberen Teil der Darstellung die Kondensatbildung KB zu erkennen, die in Richtung Anlegelinie AL auf der Walze in Kondensattropfen KT übergeht, die dann in den Schmelzefilm nach Erreichen der Anlegelinie auf der Kühlwalze eingeprägt werden, wobei dieser Bereich BD der Einprägungen unter Bildung der angesprochenen Defekte im mittleren Bereich der fotografischen Darstellung gemäß Figur 10 zu ersehen ist. Darunter ist das Wasserbad WB angedeutet, das jedoch für die Erläuterung und Entstehung der Kondensatbildung im Rahmen der Erfindung irrelevant ist.

Aufgabe der vorliegenden Erfindung ist es von daher, ein verbessertes Verfahren sowie eine verbesserte Vorrichtung zu schaffen, mit der sichergestellt ist, dass auch und insbesondere bei der Herstellung von Kunststofffilmen, die aus einer Mischung von zumindest einem Polymer und zumindest einem Plastifizierungsmittel (also eines Lösungsmittels, nachfolgend teilweise auch Solvent genannt) beliebiger Art (beispielsweise in Form eines Lösungsmittels oder beispielsweise auch in Form eines Mineralöls oder dergleichen) hergestellt werden können, eine höhere Qualität unter Vermeidung oder Verminderung von nach dem Stand der Technik auftretenden Defektstellen erreicht werden kann.

Die Aufgabe wird bezüglich des Verfahrens entsprechend den im Anspruch 1 und bezüglich der Vorrichtung entsprechend den im Anspruch 7 angegebenen Merkmalen gelöst. Vorteilhafte Ausgestaltungen der Erfindung sind in den Unteransprüchen angegeben.

Im Rahmen der Erfindung hat sich letztlich gezeigt, dass die einleitend angesprochenen Defektstellen auf dem Batterieseparatorfilm auf Kondensationseffekten beruhen, die zu der Beeinträchtigung des Kunststofffilms führen. Dies hat besondere Bedeutung bei der Herstellung von Batterie-Separator-Folien für Lithium-Ionen-Batterien (Akkumulatoren) .

Die Erfindung basiert auf der Erkenntnis, dass bereits bei der Übergabe des Vorfilms oder Schmelzefilms von der Breitschlitzdüse auf eine Kühlstation (in der Regel in Form einer Kühlwalze) bereits Kondensatdefekte dadurch entstehen, dass es zu einer Kondensatbildung in der Luft und auf der Kühlwalze kommt, wobei sich die hier entstehenden oder abscheidenden Kondensattröpfchen dann letztlich in die Schmelze einprägen und zu den angesprochenen unerwünschten Defekten bei dem zu reckenden Film führen.

Im Rahmen der Erfindung durchgeführte systematische Untersuchungen haben gezeigt, dass Kondensatdefekte mit den geschilderten nachteiligen Folgewirkungen vor allem dann auftreten können, wenn folgende Bedingungen erfüllt sind:
1. Eine Schmelze oder eine Gießfolie oder eine bereits verstreckte Folie wird durch Auflage auf eine oder mehrere Kühlwalzen abgekühlt;
2. Die Schmelze oder Folie besteht aus einer Mischung aus mindestens einem Polymer und mindestens einem Plastifizierungsmittel (wobei als Plastifizierungsmittel beliebige Mittel in Betracht kommen, also Lösungsmittel - Solvent - wie aber auch beispielsweise Mineralöl oder dergleichen, Be- oder Einschränkungen gibt es insoweit nicht);
3. Die Schmelze oder Folientemperatur ist höher als der Flammpunkt des Lösungsmittels (Solvents);
4. Die Oberflächentemperatur der Schmelze oder Folie ist hoch genug, um eine lokale Veränderung der Struktur durch Kontakt mit dem flüssigen Lösungsmittel zuzulassen (Typischerweise tritt dieser Effekt auf, wenn das Kunststoffmaterial noch vollständig oder teilweise im Schmelzzustand vorliegt, also in der Phase, in der z.B. ein Vorfilm oder Schmelzefilm aus einer Breitschlitz- oder Extruderdüse auf eine Kühlwalze übergeben wird, wobei der Vorfilm dann noch nicht erstarrt ist.

Unter diesen Voraussetzungen bildet sich vor Auflage der Schmelze bzw. der Folie auf die Kühlwalze um die Schmelze oder Folie herum sowie in der der Schmelze oder der Folie umgebenden Atmosphäre ein Kondensat, welches aus der Schmelze oder der Folie austretendes Lösungsmittel oder Solvent umfasst oder daraus besteht. Dieses Kondensat kann dann an der Anlegelinie der Schmelze oder des Films auf der Walze zwischen der Schmelze bzw. dem Film und der Walze quasi "eingesperrt" werden, wodurch dann letztlich die geschilderten Defekte auf der Filmoberfläche herrühren.

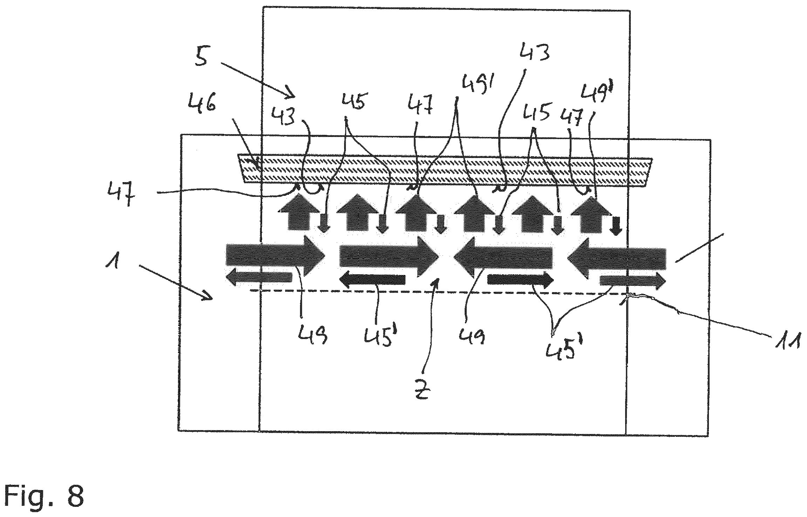

Beispielsweise auf biaxial verstreckten Folienoberflächen werden diese Defekte zu leichten Dellen, die durch lokal höhere Lichtdurchlässigkeiten sowie eine lokal höhere Oberflächenrauigkeit identifizierbar sind, wie dies bereits anhand der Figuren 8a und 8b erläutert ist. Die erwähnten Defekte können je nach Prozessführung einseitig oder beidseitig an der Folie, also an dem Kunststofffilm, auftreten.

Im Rahmen der Erfindung wird nunmehr eine Lösung vorgeschlagen, wie eine Verbesserung der herzustellenden Kunststofffolie erreicht werden kann. Insbesondere wird im Rahmen der Erfindung eine Verbesserung der Gleichmäßigkeit vor allem einer Batterie-Separator-Folie (BSF-Folie) erzielt (wie sie beispielsweise für Batterien oder Akkumulatoren, insbesondere Lithium-Batterien, verwendet werden), bei deren Produktion ein Plastifizierungsmittel, also ein Lösungsmittel oder Solvent oder dergleichen eingesetzt wird. Die im Rahmen der Erfindung erzielte gesteigerte Folienqualität führt letztlich zu einem geringeren Ausschuss und zu einer Erhöhung der Produktivität.

Da die erwähnte, die Folien nachteilig beeinflussende Kondensatbildung vor allem bei der Herstellung von Lösungsmittel umfassenden Kunststofffolien auftritt bzw. auftreten kann, schlägt die Erfindung vor, vor allem hier eine gegenüber dem Stand der Technik verbesserte Prozessführung zu realisieren und/oder eine Einrichtung und/oder eine Anordnung zur Vermeidung von Kondensatdefekten vorzusehen. Grundsätzlich können die erwähnten Kondensatdefekte auch in einer Reckstufe auftreten, sogar in einer Längsreckstufe, stellen dort aber in der Regel kein oder nur ein geringeres Problem dar, weil in diesen Reckstufen die Oberflächentemperatur der Folie in der Regel nicht mehr so hoch ist und/oder die Temperaturunterschiede zwischen der Folientemperatur und der Walzentemperatur (Kühlwalze) nur noch so gering sind, dass eine entsprechende Kondensatbildung nicht oder nicht mehr in relevantem Maß auftritt.

Zusammengefasst kann festgehalten werden, dass die erläuterten Kondensatdefekte durch die erfindungsgemäßen Maßnahmen vermieden werden und dadurch die Folienqualität, d.h. insbesondere die Optik und die Film-Eigenschaften verbessert werden.

Die Erfindung wird nachfolgend anhand von Ausführungsbeispielen näher erläutert. Dabei zeigen im Einzelnen:
- Figur 1:: eine schematische Seitenansicht einer Extruder- oder Flachdüse unter Abgabe eines Schmelzefilms auf eine Kühlwalze;
- Figur 2:: eine schematische Seitenansicht eines erfindungsgemäßen Ausführungsbeispiels unter Verwendung einer Deck- oder Abschirmmatte;
- Figur 3:: ein abgewandeltes Ausführungsbeispiel in schematischer Seitenansicht unter Verwendung einer festen Abdeckeinrichtung in Form einer Abdeckwand;
- Figur 4:: ein weiteres Ausführungsbeispiel unter Verwendung einer Heizeinrichtung zur Vermeidung einer Kondensatbildung oder zur Vermeidung eines Niederschlags von Kondensat;
- Figur 5:: ein weiteres Ausführungsbeispiel unter Verwendung einer Heizeinrichtung, wie anhand von Figur 4 geschildert sowie einer Abdeckeinrichtung, wie anhand von Figuren 2 oder 3 erläutert;
- Figur 6a:: eine Stirnseitenansicht parallel zur Rotationsachse der Kühlwalze unter Verwendung einer in dem Zwischenbereich angeordneten Luftumwälzeinrichtung in Form einer Abblaseinrichtung;
- Figur 6b:: eine entsprechende um 90° verdrehte Draufsicht auf das Ausführungsbeispiel nach Figur 6a;
- Figur 7a:: eine Stirnseitenansicht parallel zur Rotationsachse der Kühlwalze unter Verwendung einer in dem Zwischenbereich angeordneten Luftumwälzeinrichtung in Form einer Absaugeinrichtung;
- Figur 7b:: eine entsprechende um 90° verdrehte Draufsicht auf das Ausführungsbeispiel nach Figur 7a;
- Figur 8:: ein weiteres Ausführungsbeispiel, bei welchem die an Hand der Figuren 6a und 6b beschriebene Abblaseinrichtungen mit der an Hand von Figur 7a und 7b beschriebenen Absaugeinrichtung als kombinierte Ausführungsform dargestellt sind;
- Figur 9:: ein weiteres Ausführungsbeispiel in schematischer Seitendarstellung, wobei neben einer ersten Kühlwalze noch eine nachfolgende zweite Walze oder Kühlwalze vorgesehen ist;
- Figur 10a:: eine ausschnittsweise schematische Draufsicht auf eine nach dem Stand der Technik hergestellte Folie mit Defektstellen;
- Figur 10b:: eine vergleichbare Darstellung zu Figur 8a, allerdings zur Darstellung einer höheren Lichtdurchlässigkeit an den Defektstellen; und
- Figur 11:: eine ausschnittsweise fotografische Darstellung der Unterseite des Schmelzefilms vor und nach der Anlegelinie auf einer Kühlwalze unter Einbringung von Kondensat in den Schmelzefilm.

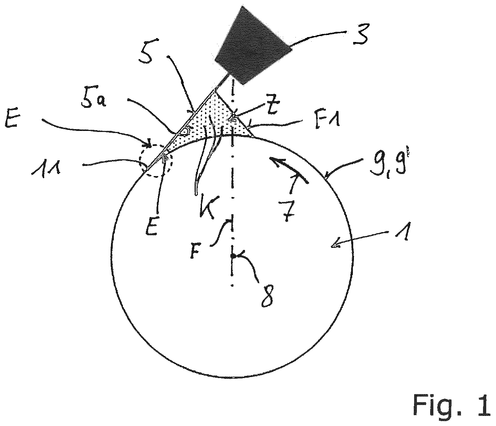

Nachfolgend wird auf Figur 1 Bezug genommen, die in schematischer Seitenansicht eine Kühlwalze 1 zeigt, auf die eine von einer Flach-, Breitschlitz- oder Extruderdüse 3 ausgegebene Schmelze oder ein Schmelzefilm 5 übergeben wird.

Die Kühlwalze 1 wird üblicherweise in einer Rotationsrichtung 7 kontinuierlich gedreht. Der Walzenmantel 9 wird dabei auf eine gewünschte Walzenmantel-Temperatur T_{R} temperiert. Üblicherweise befindet sich die Kühlwalze 1 zumindest in einer Teilhöhe in einem Wasserbecken, was aber nicht zwingend ist. Anstelle eines vorstehend genannten Wasserbeckens kommt allgemein ein Kühlbecken in Betracht, das mit einem geeigneten Kühlmedium gefüllt ist, üblicherweise einer Kühlflüssigkeit. Diese kann aus Wasser, Solvent oder einem anderen Mittel bestehen oder Wasser, Solvent oder andere Mittel mit umfassen. Grundsätzlich kommen alle Kühlmittel in Betracht, die zum Kühlen der Schmelze geeignet sind.

Die sogenannte Anlegelinie 11, an welcher der aus der Flach- oder Extruderdüse 3 austretende Schmelzefilm 5 an dem Walzenmantel 9 erstmals angelegt wird, befindet sich bei Anordnung der Kühlwalze 1 in der Regel in dem Kühlbecken oberhalb der Kühlmittel- oder Wasseroberfläche.

Bei der Darstellung gemäß Figur 1 ist angedeutet, dass sich vor allem bei der Herstellung von Kunststofffilmen unter Verwendung zumindest eines Polymers mit zumindest einem Lösungsmittel bzw. Weichmacher (Solvent) ein Kondensat K bilden kann, was dann quasi durch den Einschluss zwischen dem Schmelzefilm und der Walzenoberfläche "eingeschlossen" wird und zu einer Ablagerung auf der Schmelzefilm-Unterseite 5a führt. Der besonders kritische Bereich ist in Figur 1 dabei mit dem Bezugszeichen E bezeichnet, in welchem es vor allem zu Einprägungen von Kondensat in die Schmelze oder den Film 5 kommen kann. Dabei wird zur Vermeidung von Missverständnissen an dieser Stelle nochmals angemerkt, dass es sich bei einem Solvent letztlich um ein Lösungsmittel handelt und insoweit die Begriffe "Solvent" und "Lösungsmittel" wechselweise benutzt werden.

Für die Kondensatbildung ist besonders der Zwischenraum Z von Bedeutung, der sich im Querschnitt keilförmig in Richtung zur Anlegelinie 11 hin verjüngt. Es handelt sich dabei vor allem um jenen Bereich Z, der durch den Schmelzefilm 5 (bzw. dessen Unterseite 5a), dem Walzenmantel 9 bzw. allgemein der Oberfläche 9' des Walzenmantels 9 begrenzt wird, und dabei zur rückwärtigen offenen Seite hin beispielsweise durch eine gedachte, in Figur 1 strichpunktiert eingezeichnete Fläche F begrenzt ist, dass die Rotationsachse 8 der Kühlwalze 1 zum einen und die Mittellängsebene in Längsrichtung der Extruder-Breitschlitzdüse 3 in dieser Ebene F liegt. Abweichend zu der so definierten Fläche F in Figur 1 kann der Zwickelbereich Z gegenüberliegend zur Anlegelinie 11 beispielsweise auch durch eine gedachte Ebene oder Fläche F1 begrenzt werden, die beispielsweise quer oder senkrecht zur Schmelzfilmebene verläuft und jenen Bereich markiert, in welchem die Kondensatbildung stark abnimmt oder abgenommen hat. Entscheidend im Sinne der Erfindung ist der Bereich, in welchem der Zwischenraum zunehmend schmäler wird und dann an der Anlegelinie 11 endet.

In der Anmeldung wird teilweise nicht nur von einer Breitschlitzdüse sondern auch von Extruderdüse oder Flachdüse gesprochen. Allgemein handelt es sich Rahmen der Erfindung um eine Düse. Bevorzugt kommt in diesem Zusammenhang eine Flachdüse zum Einsatz, die wie ausgeführt aber auch als Breitschlitz- oder Extruderdüse ausgebildet sein kann aber nicht muss.

### 1. Verwendung einer Einrichtung und/oder Anordnung zur Vermeidung von Kondensatdefekten

Verbesserungen gegenüber dem Stand der Technik können durch eine oder mehrere der nachfolgenden Maßnahmen oder Einrichtungen erzielt werden.

Es hat sich gezeigt, dass die Kondensatdefekte dadurch vermieden werden können, dass zumindest eine der nachfolgenden Maßnahmen realisiert wird.

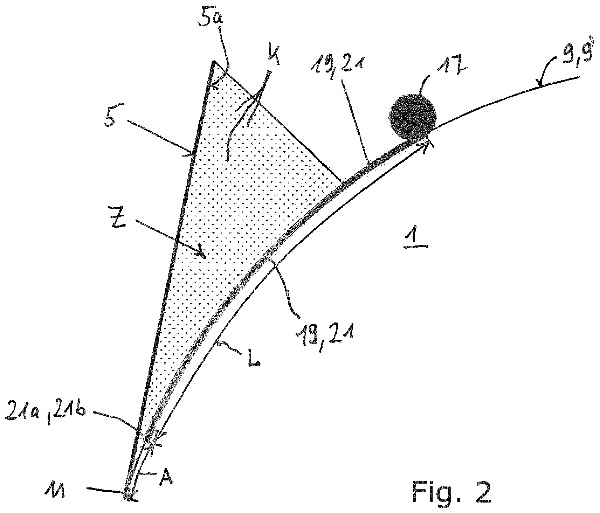

Dabei wird anhand von Figur 2 gezeigt, dass eine Verbesserung dadurch erzielt werden kann, dass für den entsprechenden Abschnitt auf der Oberfläche 9', also auf dem Walzenmantel 9 der Kühlwalze 1 eine entsprechende Abdeckeinrichtung 19 verwendet wird. Figur 2 stellt dabei einen vergrößerten Teilbereich aus Figur 1 dar, der vor allem den sich in Rotationsrichtung keilförmig verjüngenden Zwischenraum Z beschreibt, in welchem die Kondensatbildung und Kondensatabscheidung auf der Walzenoberfläche an sich stattfindet.

Dazu ist eine Abdeckeinrichtung 19 im nachfolgenden Ausführungsbeispiel in Form eines Vlieses oder einer Abdeckmatte 21 vorgesehen. Auch wenn nachfolgend teilweise von Vlies 21 gesprochen wird, so handelt es sich dabei letztlich allgemein nur um eine Matte oder Abdeckmatte 21, also einer Art Abdeckung 21 oder Plane 21, insbesondere in Form einer textile Abdeckung 21, die aus unterschiedlichsten Materialien bestehen kann, beispielsweise aus Naturfasern, Chemiefasern, nicht textilen Rohstoffen, Vliesstoffen, Filze etc., die zu einem flächenförmigen Gebilde verarbeitet sind und oder daraus bestehen oder zumindest die Formgebung aufweisen.

Ganz allgemein wird schon an dieser Stelle angemerkt, dass die Abdeckung nicht nur aus einem Material oder einer Materialschicht bestehen muss, sondern auch mehrlagig sein kann, also mehrere Lagen umfassen kann. Dabei können auch Materialien verwendet werden, die das Kondensat besonders gut abtransportieren können, beispielsweise durch einen dem Material immanenten oder durch entsprechende Beschichtung realisierten Kapillareffekt. Dabei werden Materialien bevorzugt, die einen Kapillareffekt erzeugen können, um das abgeschiedene Kondensat von dem Bereich hoher Dichte in einen außerhalb der Problemzone liegenden Bereich mit niedrigerer Kondensatdichte wegzuführen.
Zum besseren Verständnis wird dazu auf Figur 2 bezuggenommen, die auszugsweise einen Teilumfang einer Kühlwalze 1 mit einen gemäß der Teilumfangs-Darstellung sichtbaren Walzenmantel 9 aufweist, sowie der anhand von Figur 1 in Seitendarstellung schematisch wiedergegebenen Flach- oder Extruderdüse 3, von der der in Rede stehende Schmelzefilm 5 abgegeben und längs der Anlegelinien 11 senkrecht zur Zeichnungsebene verläuft und damit parallel zur Kühlwalze 1 bzw. deren Rotationsachse steht.

Daraus ist zu ersehen, dass die insbesondere textile Abdeckung in dem Zwischenbereich zwischen dem von der Flach- oder Extruderdüse 3 abgegebene Schmelzefilm 5 und den für die Kondensatbildung relevanten Zwischenbereich Z so vorgesehen, angebracht und gehalten, dass die Matte 21 oder Abdeckung 21 über die üblicherweise parallel zur Kühlwalze 1 verlaufenden Halteeinrichtung 17 gehalten wird und in einer entsprechenden Länge L auf der Oberfläche 9' des Walzenmantels 9 anliegend positioniert ist.

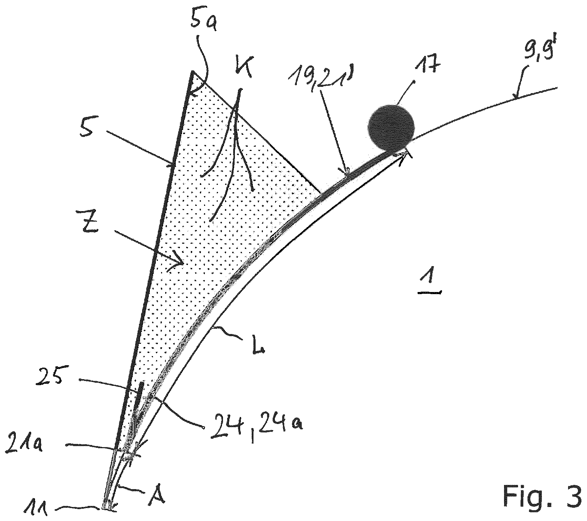

Diese insbesondere textilförmige Abdeckmatte 21 oder allgemein Abdeckung 21 wird entsprechend der Darstellung gemäß Figur 3 ortsfest mittels einer Halteeinrichtung 17 gehalten, die sich in der Regel parallel zur Rotationsachse zumindest in der Nähe des Walzenmantels über die Kühlwalze in Längsrichtung erstreckt. Die Abdeckmatte 21 wird also mit der Kühlwalze 1 nicht mitrotierend gehalten. Mit anderen Worten rotiert die Kühlwalze 1 unter der nicht mitrotierenden textilen Abdeckung 21 hinweg.

Damit diese Abdeckmatte 21, also das teilweise auch so genannte Vlies 21 den gewünschten Effekt aufweist, muss die Abdeckmatte oder Abdeckung 21 zwischen dem Schmelzefilm 5 und der Kühlwalze 1 so aufgelegt sein, dass die planenförmige Abdeckung 21 bzw. das Vlies 21 vor der Anlegelinie 11 auf dem Walzenmantel 9 endet.

Ferner muss das Vlies bzw. die Abdeckung 21 in Rotationsrichtung 7 vor der Anlegelinie 11 des Schmelzefilms 5 enden, und zwar mit möglichst geringem Abstand. Dieser Abstand A sollte möglichst gering sein, also so klein als möglich, ohne die Schmelze 5 zu berühren. Dies ist unter anderem vom Walzendurchmesser und beispielsweise auch von der Vliesdicke abhängig. Ganz allgemein soll dieser Abstand also größer als 0 mm sein, insbesondere beispielsweise größer als 0,5 mm, 1 mm, 1,25 mm, 1,5 mm, 1,75 mm, 2 mm, 2,5 mm insbesondere mehr als 5 mm, 7,5 mm, 10 mm, 12,5 mm, 15 mm, 17,5 mm, 20 mm, 22,5 mm, und mehr als 25 mm. Ebenso kann oder soll dieser Abstand wie erwähnt vorzugsweise kleiner als 40 mm, insbesondere kleiner als 35 mm, 30 mm, 25 mm, 20 mm, 15 mm, und kleiner als 10 mm sein. Noch geringere Werte sind dabei bevorzugt, so dass dieser Abstand A beispielsweise kleiner ist als 7,5 mm, 5 mm, 4 mm, 3 mm, 2 mm, 1,5 mm, 1,25 mm, 1,0 mm, 0,75 mm, 0,5 mm oder 0,25 mm.

Die angegebenen Werte gelten grundsätzlich unabhängig vom Durchmesser der Kühlwalze oder Chillroll. Häufig kommen Kühlwalzen in Betracht, deren Durchmesser zwischen 100 mm und 5000 mm liegen, also vorzugsweise zwischen 200 mm und 50000 mm. Kühlwalzen-Durchmesser um 300 mm haben sich dabei als typische Durchmessergrößen herausgestellt.

Bei der Verwendung einer in Rede stehenden Abdeckeinrichtung 19, kurz auch als Vlies 21 bezeichneten Plane 21 sollte darauf geachtet werden, dass keine Falten entstehen. Das in Rotationsrichtung 7 der Kühlwalze 1 nachlaufende Bahnende 21a der Abdeckmatte oder Abdeckung 21 darf keinen Kontakt mit dem Schmelzefilm 5 haben. Von daher ist hier der oben erwähnte ausreichende Abstand A zur Schmelze bzw. zur Anlegelinie der Schmelze auf dem Walzenmantel 9 einzuhalten. Die dem Schmelzefilm 5 zugewandte Schnittkante 21b am sogenannten Bahnende 21a der Abdeckmatte 21 soll daher von hoher Qualität sein, damit das von der Abdeckmatte oder Vlies 21 aufgenommene Kondensat nicht zur Tropfenbildung an der Abdeckmatten- oder Vlieskante 21c führt, also am Bahnende 21a der Abdeckmatte 21, wobei das Bahnende 21a gleichzeitig in dem genannten Ausführungsbeispiel die Schnittkante 21b bildet. Eine solch hohe Qualität der Schnittkante 21b bedeutet, dass diese Schnittkante 21b möglichst glatt und faserfrei sein soll. Denn herausstehende oder vorstehende Fasern würden dafür sorgen, dass von der Abdeckung bzw. dem Vlies aufgrund der Schwerkraft abgegebenes Lösungsmittel sich lokal zu einem Tropfen sammeln und periodisch oder unregelmäßig auf die Walze abtropfen könnte. Von dort können die Tropfen dann auf die Schmelze gelangen. Eine insbesondere glatte, d.h. saubere, faserfreie, immer weiche und/oder versiegelte Schnittkante kann stattdessen für eine gleichmäßige Lösemittelabgabe entlang der Schnittkante sorgen.

Als günstig hat sich dabei auch erwiesen, wenn diese Schnittkante 21b beispielsweise wie folgt hergestellt wird:
- mittels Schneidens unter Zuhilfenahme eines Messers,
- mittels Schneidens unter Zuhilfenahme einer Schere oder Schlagschere, oder
- mittels Schneidens unter Zuhilfenahme eines Lasers (Laserschnitt) und beispielsweise durch Stanzen mittels eines geeigneten Werkzeuges.

Da also eine gleichmäßige Schnittkante 21b sich dadurch auszeichnen soll, dass keine Faserenden vorstehen, wird bevorzugt ein Laserschnitt zur Herstellung einer gleichmäßigen faserfreien Schnittkante 21b durchgeführt.

Die vorstehend gewählten Begriffe wie Abdeckmatte, Abdeckung, Plane oder allgemein Vlies bedeuten, dass hier keine Einschränkung in Hinblick auf eine spezifische Materialwahl oder Materialgestaltung oder Materialaufbau etc. besteht.

Unter den gewählten Begriffen wie Abdeckmatte, Abdeckung, Plane oder Vlies können beispielsweise folgende Materialien verstanden werden:
- Gewebe
- Papier
- Leder
- Non-Woven/Vlies
- Neopren/Neoprenimitat
- Moosgummi
- Membranen (einschließlich Separator-Folien, wie sie im Rahmen der Erfindung selbst hergestellt werden sollen)
- Kunstleder
- Schaumstoffe
- Verbundmaterialien

Die Materialien können dabei aus Polyester, Cellulose, Polypropylen, Polyester/Polyamid, Polyethersulfone/Polyamid, Cellulose/Polyester, Papier, Gummi oder Moosgummi (Schaum), Neoprenimitat (Gewebe) und/oder Kunstleder (wie beispielsweise unter dem Handelsnamen Alcantara® bekannt und vertrieben) und dergleichen bestehen.

Ganz allgemein kann also die erläuterte Abdeckeinrichtung 19, hier in Form einer Art Plane oder Vlies 21, eine oder mehrere der nachfolgenden Eigenschaften aufweisen, nämlich
- flexibel
- soft oder weich
- faltenfrei
- entweder porös oder aber auch nicht-porös
- flüssigkeits- oder feuchtigkeitsdurchlässig oder nicht-flüssigkeits- oder nicht-feuchtigkeitsdurchlässig
- textil- oder gewebeförmig oder -ähnlich

Dadurch lässt sich gewährleisten, dass die Abdeckeinrichtung 19 in Form der Abdeckmatte 21 auf der Oberfläche 9' der rotierenden Kühlwalze 1 mit dieser nicht mit-rotierend vollflächig aufliegt.

Ferner wird angemerkt, dass die Abschirmmatte (21) oder allgemein die Abdeckeinrichtung (19) eine Dicke vorzugsweise zwischen 10 µm bis 4 mm und/oder ein Flächengewicht vorzugsweise zwischen 30 g/m² bis 100 g/m² aufweist oder aufweisen kann. Allgemein kann also die Abschirmmatte eine Dicke von mehr als 50 µm, 100 µm, 200 µm, 300 µm, 400 µm, 500 µm, 600 µm, 700 µm, 800 µm, 900 µm aufweisen, sogar mit mehr als 1 mm, 1,25 mm, 1,5 mm oder 1,75 mm. Umgekehrt kann die Dicke der Abschirmmatte (21) oder der Abdeckeinrichtung (19) eine Dicke aufweisen, die kleiner ist als 1,75 mm, insbesondere kleiner ist als 1,5 mm, 1,25 mm oder 1 mm. Es sind sogar Dicken möglich, die kleiner sind als 900 µm oder 800 µm, 700 µm, 600 µm, 500 µm, 400 µm, 300 µm und kleiner als 200 µm, kleiner als 100 µm oder sogar kleiner als 50 µm.

### 2. Weiteres Ausführungsbeispiel zur Vermeidung einer Kondensatabscheidung

Nachfolgend wird unter Bezugnahme auf Figur 3 ein weiteres Ausführungsbeispiel beschrieben, welches grundsätzlich ähnlich zu dem Ausführungsbeispiel nach Figur 2 ist.

Auch bei der Variante gemäß Figur 3 ist bei der Walzenoberfläche 9' der Kühlwalze 1 eine Abdeckeinrichtung 19 in Form einer Abschirmmatte 21 vorgesehen, die zumindest auch in dem Zwischenbereich Z auf die Oberfläche 9' der Kühlwalze aufgelegt ist, und dabei möglichst nah bis an die Anlegelinie 11 reicht, an der die Schmelze oder der Schmelzefilm 5 auf die Oberfläche 9' der Kühlwalze 1 angelegt wird.

Die erwähnte Abdeckung oder Abschirmmatte 21 dient auch in diesem Ausführungsbeispiel der Vermeidung eines Kondensat-Niederschlages auf der Walze 1 oder Walzenoberfläche 1' (auf der Schmelze selbst wird sich in der Regel aufgrund der hohen Temperaturen der Schmelze kein Kondensat direkt niederschlagen).

Die Abdeckeinrichtung 19 ist hier in Form einer Abschirm- oder Abdeckwand 21 ausgebildet und besteht bevorzugt aus einem nicht-porösen Material, d.h. in diesem Ausführungsbeispiel bevorzugt aus einem festen Material wie beispielsweise Blech, Glas, Kunststoff etc., welches fest installiert ist. Mit anderen Worten kann eine derartige feste Abdeckung durch eine geeignete Haltekonstruktion in einem möglichst geringen Abstand oberhalb der Walzenoberfläche 9' montiert und gehalten werden, bevorzugt konzentrisch zur Rotationsachse 8 der Walze 1.

Aber auch eine derartige beschriebene eher feste Abschirm- bzw. Abdeckwand 21' muss nicht zwingend im Abstand oberhalb des Walzenmantels angeordnet und gehalten werden, sondern kann ebenfalls durch den darunter hinwegrotierenden Walzenmantel gehalten werden. In diesem Falle würde also die Abdeckeinrichtung 19 beispielsweise von der Abschirm- bzw. Abdeckwand 21 ebenfalls auf der Walzenoberfläche aufliegen. Eine Beschädigung der Walzenoberfläche oder Oberseite entsteht dadurch nicht. Von daher ist in Figur 3 eine derartige Variante gezeigt, bei der die Abdeck- oder Abschirmeinrichtung 19 auf dem Walzenmantel mit der Walze selbst nicht mitrotierend aufliegt.

Möglich wäre auch, dass eine mit der Kühlwalze nicht mitrotierende Tragkonstruktion vorgesehen ist, die beispielsweise im Stirnseitenbereich der Walze ortsfest verankert ist und dabei eine zwischen diesen stirnseitigen Trageinrichtungen aufgespannte Abschirmfolie trägt und hält. Es könnte sich dabei um eine zeltähnliche Struktur handeln, die dann im geringen Abstand über der Walzenoberfläche 9' gehalten und verspannt ist, so dass das eigentliche Abschirmtuch oder die Abschirmfolie selbst bevorzugt die Walzenoberfläche 9' nicht berührt.

Auch dies wird letztlich unter einer festen Abdeckwand 21' im Sinne der Beschreibung verstanden, da durch die Verspannung der Abschirmfolie eine mehr oder weniger stabile Konstruktion oder Tragkonstruktion geschaffen ist.

Unter Verwendung einer derartigen Abdeckwand 21' aus bevorzugt nicht-porösem Material, welches also bevorzugt auch nicht perforiert ist und somit Wasser- oder Kühlmedium dicht oder undurchlässig ist (allgemein undurchlässig für das sich niederschlagende Kondensat), kann der Zutritt des Kondensats zur Walzenoberfläche rein physikalisch unterbunden werden.

Um dabei zu vermeiden, dass das Kondensat unkontrolliert in den Bereich zwischen der Walze und der Schmelze läuft, ist bei der vorstehend erläuterten Variante gemäß Figur 3 bevorzugt zusätzlich eine Ablaufvorrichtung 24 vorgesehen, die im Querschnitt gemäß Figur 3 beispielsweise V-förmig gebildet sein kann, und zwar unter Ausbildung eines Steges 25, der von der Abdeckwand 21' bevorzugt an deren unterem Ende, also dem tiefsten Punkt mit Vertikalkomponente über eine gewisse Länge aufsteigt, um dadurch einen rinnenförmigen Ablaufbereich 24a zu bilden. Dies führt dazu, dass das auf der Oberseite der Abdeckwand 21' niederschlagende Kondensat bis in diesen rinnenförmigen Ablaufbereich 24a der Schwerkraft folgend, herunterfließen kann um dann gegebenenfalls auch allein nur mit Schwerkraft nach außen abgeleitet zu werden (also in Richtung der beiden gegenüberliegenden Stirnseiten der Walze, also somit aus dem Bereich unterhalb der Schmelze heraus). Die Wegbeförderung des Kondensats muss aber nicht zwingend nur mit reiner Schwerkraft erfolgen, sondern kann auch durch eine Absaugung an einer oder an beiden gegenüberliegenden Seiten der Ablaufrinne und damit an den gegenüberliegenden Seiten des Schmelzerandes unterstützt werden oder vor allem auch nur durch eine Absaugeinrichtung erfolgen. Die Ablaufrinne selbst kann beispielsweise durch Umformen an der unteren Kante mit einem bestimmten Winkel durchgeführt werden, wobei der Winkel zwischen der Oberfläche der Kühlräume und dem Schmelzefilm so gebildet wird, dass das Ende des Ablaufschenkels nicht die Unterseite des Schmelzefilms berührt.

Im erläuterten Ausführungsbeispiel nach Figur 3 ist als Abdeckeinrichtung 19 eine Abdeck- oder Abschirmwand 21 verwendet worden, die aus festem oder eher festem Material besteht und bevorzugt in einem geringen Abstand gegenüber der darunter hinwegrotierenden Walzenoberfläche 9' angeordnet, montiert und gehalten ist. In diesem Falle ist auch bevorzugt der Steg 25 unter Bildung des rinnenförmigen Ablaufbereichs 24a aus dem gleichen bevorzugt festen Material gebildet.

Allerdings soll schon an dieser Stelle angemerkt werden, dass auch im Falle einer Abdeckeinrichtung 19 in Form einer Abdeckmatte 21 (wie anhand von Figur 2 beschrieben) ebenfalls mit einer vergleichbaren Ablaufvorrichtung 24 ausgestattet sein kann. Auch hier kann am unteren Ende bzw. möglichst am tiefsten Punkt der Abschirmmatte 21 eine stegförmige Erhebung 25 vorgesehen sein, und zwar unter Ausbildung einer Ablaufvorrichtung 24, d.h. eines rinnenförmigen Ablaufbereiches 24a. Bei Verwendung einer Abschirmmatte 21 kann der Steg 25 gegebenenfalls auch aus dem gleichen Material gebildet sein, gegebenenfalls unter Einarbeitung von Verstärkungsmaterial, damit der Steg 25 formstabil in dem Zwischenraum Z zu liegen kommt, ohne die Unterseite 5a des Schmelzefilms 5 zu berühren. Ebenso kann aber auch der Steg 25 beispielsweise bei Verwendung von bestimmten Materialien entsprechend ausgebildet, beispielsweise angegossen sein, ohne Verwendung von formstabilen Haltestegen, um den wandförmigen Steg 25, wie erläutert, positionsstabil und berührungsfrei gegenüber dem Schmelzefilm 5 auszubilden und zu halten.

Bevorzugt alternativ (gegebenenfalls aber auch ergänzend zu der erläuterten Ablaufvorrichtung 24) könnte auch ein saugfähiges Material verwendet werden, welches flächig oder mattenförmig auf die erläuterte feste Abdeckung 21 aufgelegt wird. Durch die Kapillarwirkung könnte das Kondensat entgegen der Drehrichtung der Kühlwalze und damit der Abzugsrichtung des Schmelzefilms in dem saugfähigen Material nach oben hinwandern und dort abgesaugt oder aufgeheizt werden. Das dahinterstehende Prinzip besteht darin, dass die Kondensatflüssigkeit durch die Kapillarwirkung vom feuchten in den trocken Bereich des auf der Abdeckung aufgelegten saugfähigen mattenförmigen Materials transportiert wird. Wenn diese saugfähige Matte allerdings mehr oder weniger gleichmäßig feucht ist, könnte der Kapillareffekt zum Erliegen kommen. Von daher müsste ein "stabiles Gefälle" im Feuchtigkeitsbereich in der aufgelegten saugfähigen Matte erzeugt werden, damit der Feuchtigkeitstransport vom unteren Ende der festen Abdeckung 21 bzw. der darauf aufgelegten saugfähigen Materialschicht oder Materiallage nicht zum Erliegen kommt.

Das auf dem saugfähigen Material aufgefangene bzw. befindliche Kondensat kann, allgemein gesagt, verdunsten oder verdampfen, um aus dem in Abzugsrichtung zunehmenden keilförmig zulaufenden Kondensationsbereich Z herausgeführt zu werden. Da für das aufgelegte saugfähige Material eine große Oberfläche zur Verfügung steht (weil das saugfähige Material aus einem Vlies, einem Stoffgewebe etc. bestehen kann), kann der Abtransport und der Verdunstungsvorgang für das Kondensat ausreichend sein, um zu verhindern, dass Kondensatflüssigkeit nach unten hin abfließt und zumindest mittelbar auf die Unterseite des Schmelzefilms gelangt. Möglich wäre allerdings auch, dass noch eine zusätzliche Heizeinrichtung benachbart zu dem saugfähigen Material vorgesehen wird, um damit den Verdunstungsprozess des sich darauf abgesetzten Kondensats zu beschleunigen und zu verbessern.

### 3. Weitere Einrichtung zur Vermeidung einer Kondensatabscheidung

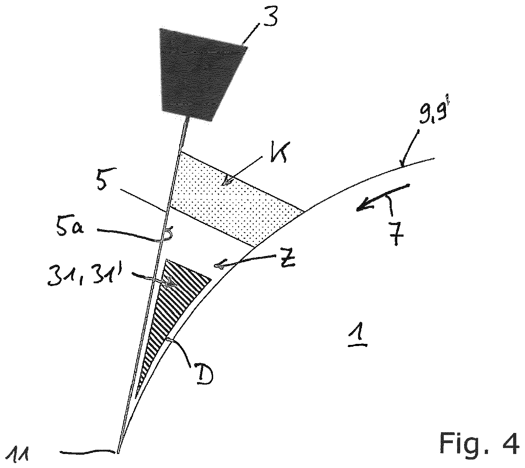

Nachfolgend wird auf Figur 4 bezuggenommen in welchem anhand eines weiteren Ausführungsbeispiels eine erfindungsgemäße Lösung erläutert wird.

Bei der Darstellung gemäß Figur 4 ist in dem Zwischenbereich Z (also zwischen dem Schmelzefilm 5, der zwischen Austrittdüse 3 und der Anlegelinie 11 auf der Oberfläche des Walzenmantels 9 der Kühl- oder Chillroll 1 zum einen verläuft und der Oberfläche 9' der Kühlwalze zum anderen) ein in der Stirnseitenansicht gemäß Figur 4 keilförmiges Heizelement 31 vorgesehen, welches sich bevorzugt über die gesamte Breite der Walze 1 oder zumindest die gesamte Breite der Schmelze bzw. des Schmelzefilms 5 erstreckt. Insoweit wird teilweise nachfolgend auch von einem Heizkeil 31' gesprochen. Allerdings ist es in vielen Fällen auch ausreichend, wenn das keilförmige Heizelement 31 nur in einem Teil der Breite des Schmelzfilms vorgesehen ist, beispielsweise sich zumindest nur über eine Breite von 60% oder mehr erstreckt. Da das Heizelement bevorzugt mittig zum Film angeordnet wird und bevorzugt nicht mehr als 20% oder 10% von dieser Mittellage abweicht, würde bei Verwendung eines Heizelementes 31, welches sich nur über 60% der Breite des Films erstreckt, jeweils nur ein äußerer Randstreifen von jeweils 20% übrig bleiben, in dem das entsprechende Heizelement nicht unmittelbar darunterliegend angeordnet ist.

Ferner ist in Figur 4 schematisch ein Kondensationsbereich K angedeutet. Abweichend von der zeichnerischen Darstellung ist der Kondensationsbereich K aber nicht nur auf den in Figur 4 eng umgrenzten Bereich beschränkt, sondern reicht über die angegebenen Begrenzungslinien hinaus und nimmt in seiner Dichte zur rückwärtigen Seite des Zwischenraumes Z kontinuierlich ab. Dabei ist anhand von Figur 4 nur beispielhaft gezeigt, dass die rückwärtige sogenannte "Begrenzungsfläche" F auch andersartig festgelegt werden kann, als im Ausführungsbeispiel nach Figur 1, da hierdurch nur ansatzweise verdeutlicht werden soll, wo der Zwischenraum Z in Richtung zu seinem in Rotationsrichtung vorlaufenden keilförmigen Ende beginnt oder als relevant zu bezeichnen ist. Im gezeigten Ausführungsbeispiel nach Figur 4 ist diese rückwärtige Begrenzungsfläche F zwischen Schmelzefilm 5 und Oberfläche 9' (also dem Mantel 9' der Walze 9) so eingezeichnet, dass jeweils ein spitzer Winkel α zwischen der Fläche F und der Fläche des Schmelzefilms 5 bzw. der Walzenoberfläche 9' bzw. der Tangente daran gebildet ist. Das genaue Ende dieser Zone hat keine Relevanz für die Erfindung. Es soll nur verdeutlicht werden, dass der in Rotationsrichtung der Kühlwalze keilförmig zulaufende Zwischenraum Z vor allem im Bereich seines sich keilförmig verjüngenden Abstandsraumes soweit aufgeheizt wird, dass dort eine Kondensation thermodynamisch nicht möglich ist.

Ein entsprechender Heizkeil 31 kann an den Stirnseiten der Walze mittels einer ortsfesten Tragkonstruktion gehalten werden.

Durch Aufheizen der Umgebung im kritischen Bereich kann dann dadurch die Kondensation des Lösungsmittels, der Weichmacher etc., also allgemein des als Summenbegriffs genannten Solvents verhindert werden. Die Aufheizung über den in Figur 4 gezeigten Heizkeil 31', also das keilförmige Heizelement 31, erfolgt also in dem erwähnten Bereich Z zwischen der Schmelze und der Walze vor dem Auflegen des Schmelzefilms 5 auf die Walzenoberfläche.

Die Temperatur des Heizkeils 31' sollte nahe an der vorliegenden bzw. Schmelzetemperatur liegen. Typischerweise betragen derartige Temperaturwerte 160°C bis 200°C.

Der Abstand des Heizkeils 31' zur Schmelze bzw. zum Schmelzefilm 5 und zur Walze 1 sollte möglichst gering sein. Diese Abstandswerte D sollten in einem Bereich zwischen 5 mm und 10 mm liegen. Ferner soll der Abstand des Heizkeils 31' zur Anlegelinie 11, an welchem der Schmelzefilm auf die Kühlwalze trifft, ebenfalls möglichst gering sein. Die Werte hierfür sollten bevorzugt zwischen 5 mm und 30 mm liegen, also bevorzugt mehr als 7,5 mm, 10 mm, 12,5 mm, 15 mm, 17,5 mm, 20 mm, 22,5 mm, oder 25 mm betragen. Ebenso können die bevorzugten Werte unter 27,5 mm, 25 mm, 22,5 mm, 20 mm, 17,5 mm, 15 mm, 12,5 mm, 10 mm, oder unter 7,5 mm liegen.

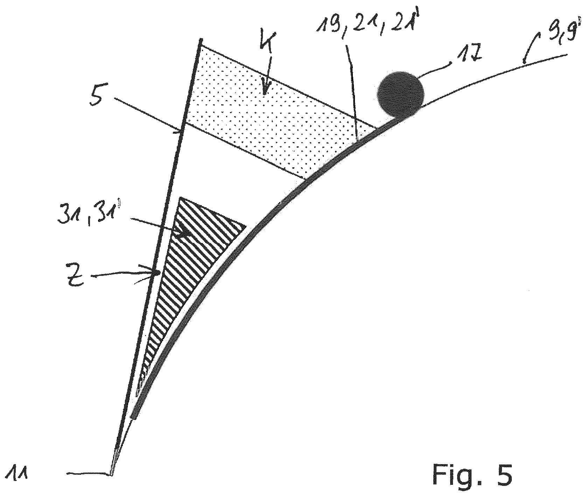

Eine weitere Verbesserung kann unter Umständen auch noch dadurch bewirkt werden, dass nicht nur die erläuterte Heizeinrichtung, also das Heizelement 31, sondern zusätzlich auch noch die anhand von Figur 3 erläuterte Abdeckung, d.h. die Abdeckmatte oder das Vlies 21 wie anhand des Ausführungsbeispiels gemäß Figur 2 erläutert oder eine Abdeckwand 21' wie gemäß Figur 3, zusätzlich Anwendung findet. Dies ist schematisch in der ausschnittsweisen Stirnseitenansicht quer zur Abzugsrichtung der Schmelze anhand von Figur 5 dargestellt.

Die erwähnte Heizeinrichtung, beispielsweise mit dem erwähnten Heizelement 31, kann aber nicht nur an einer mattenförmigen Abdeckung 21 verwendet werden, die auf die Walzenoberfläche aufgelegt und dort auch bei rotierender Walze mehr oder weniger ortsfest gehalten wird, sondern auch bei der erläuterten Variante, bei der die Abdeckeinrichtung 19 aus einer festen Abdeckwand 21' besteht, und zwar unabhängig davon, ob auf dieser festen Abdeckwand 21' oder gegebenenfalls auf der Abschirmmatte 21 zusätzlich noch eine saugfähige Materialschicht oder Materialablage 21" vorgesehen und aufgelegt ist. Unabhängig davon, ob die Abdeckung aus einer feststehenden Abdeckeinrichtung 21' oder auch nur aus einer mattenförmig auf die Walzenoberfläche aufgelegten Abdeckung 21 besteht, kann die Heizeinrichtung wie erläutert so ausgebildet sein, dass letztlich die Abdeckung oder Abdeckeinrichtung so erwärmt wird, dass sich aufgrund der Oberflächentemperatur kein Kondensat mehr niederschlägt. Die Aufheizung kann dabei durch alle geeigneten Maßnahmen erfolgen, durch entsprechende Heizeinrichtung, die parallel zur Walzenoberfläche oder bevorzugt parallel zur Rotationsachse 8 der Walzenoberfläche 9' in dem kritischen, sich in Abzugsrichtung keilförmig verjüngenden Abstandsraum Z verläuft, oder aber auch dadurch, dass ein entsprechende aufgeheiztes gasförmiges Medium in diesen Raum hindurchgeblasen wird, um die Temperaturerhöhung der Abdeckung zu erzielen.

Durch die Heizeinrichtung 31 ist letztlich auch sichergestellt, dass der Bereich, in dem das Kondensat K gemäß Figur 4 in Höchstdichte auftritt, nicht nur zur rückwärtigen Seite (also entgegen der Rotationsrichtung 7 der Kühlwalze 1), sondern auch wiederum in Richtung Heizeinrichtung 31 bzw. Heizkeil 31' in der Tiefe abnimmt bzw. nicht mehr auftritt, je näher man der Heizeinrichtung 31 kommt.

### 4. Weiteres Ausführungsbeispiel

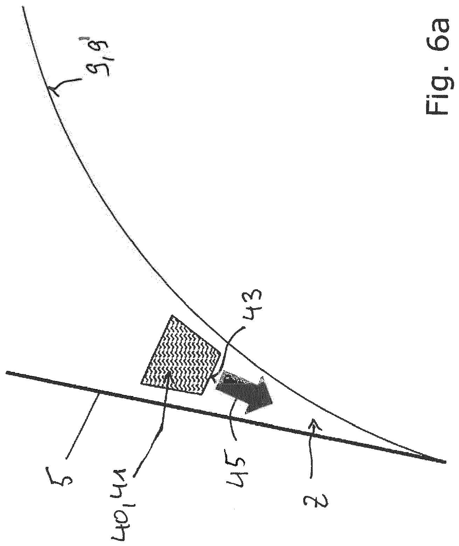

Anhand der nachfolgenden Figur 6a ist wiederum der Zwischenbereich Z zwischen Schmelzefilm 5 und Walzenoberfläche 9' (also dem Walzenmantel 9') in Stirnseitenansicht dargestellt, also senkrecht zur Kühlwalze 1 bzw. deren Rotationsachse 8.

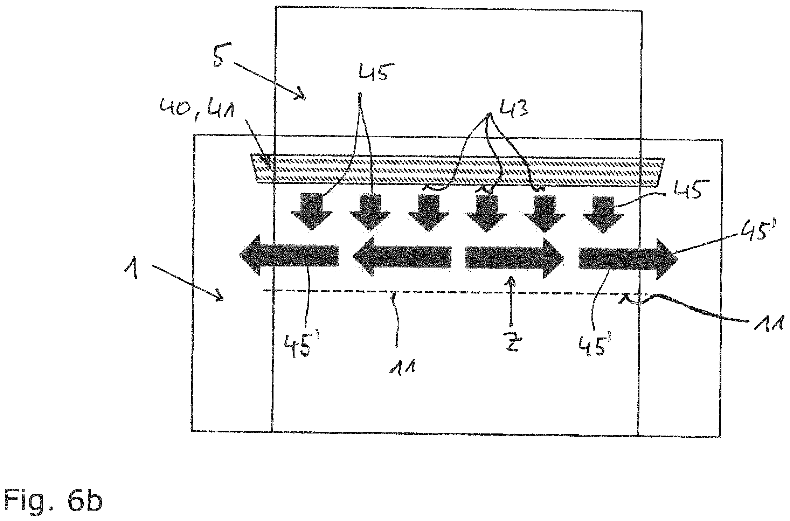

In Figur 6b ist zudem eine schematische Draufsicht auf den Schmelzfilm 5 und die darunter befindliche Kühlwalze 1 gezeigt.

In diesem Ausführungsbeispiel ist anstelle der in Figuren 4 und 5 gezeigten und sich quer und dabei parallel zur Walz- bzw. zur Rotationsachse 8 der Walze 1 erstreckenden Heizeinrichtung 31 eine sogenannte Luftumwälzeinrichtung 40, hier in Form einer Abblaseinrichtung 41 dargestellt, die beispielsweise im Querschnitt (was aber nicht entscheidend ist) trapezförmig ausgestaltet sein kann. Diese Abblaseinrichtung 41 erstreckt sich also wiederum bevorzugt zumindest über die gesamte Breite des Schmelzefilms 5, vorzugsweise also über die Breite des Schmelzefilms 5 hinaus und ist ähnlich der Heizeinrichtung 31 über eine an den gegenüberliegenden Stirnseiten der Walze eine vorgesehene ortsfeste Trageinrichtung gehalten und abgestützt (in den Figuren nicht näher dargestellt).

Ähnlich wie bei dem vorausgegangenen Ausführungsbeispiel kann aber auch die Abblaseinrichtung 41 von ihrer Quererstreckung zur Längsrichtung des Films oder zur Abzugsrichtung des Films so dimensioniert sein, dass sie bevorzugt nur eine Länge von 60% oder mehr bezogen auf die Breite des Films oder Schmelzfilms ausmacht. Bei bevorzugt mittiger oder näherungsweise mittiger Anordnung (mit einer Abweichung von vorzugsweise weniger als 20% oder 10% dieser Mittellage) ergibt sich in diesem Fall ebenfalls wieder, dass nur die beiden äußeren gegenüberliegenden Randstreifen des Films mit einer Breite von jeweils 20% oder weniger verbleiben, unterhalb derer nicht unmittelbar die konstruktiven Elemente der Abblaseinrichtung angeordnet werden.

Dabei kann die Abblaseinrichtung 41 von beiden gegenüberliegenden Stirnseiten (wobei auch eine Zuführung nur über eine Stirnseite grundsätzlich ausreichend ist oder beispielsweise eine Zuführung auch in einem mittleren Abschnitt erfolgen kann, so dass das gasförmige Medium von dort aus in beide gegenüberliegende Stirnseitenrichtungen der Kühlwalze abströmen kann) ein gasförmiges Medium, insbesondere Luft oder trockene Luft zugeführt werden, wobei die Abblaseinrichtung 41 dann in Pfeilrichtung 43 wesentlich über die gesamte Breite der Schmelzefilm-Auslassdüsen 43 aufweist oder beispielsweise eine durchgehende schlitzförmige Auslassdüse 43. Hierüber kann dann das gasförmige Medium austreten, welches in den in Richtung Anlegelinie 11 sich zunehmend keilförmig verjüngenden Abstandsraum Z zur Walzenoberfläche eingeblasen wird, bevor das gasförmige Medium dann entsprechend der Pfeildarstellungen 45 und dann 45' in der Draufsicht nach Figur 6b teilweise nach links und teilweise nach rechts außen abgeführt wird, d.h. also mehr oder weniger parallel zur Rotationsachse 8 bzw. zur Anlegelinie 11, somit also auch parallel zur in Querrichtung verlaufenden Lufteinrichtung 40, hier in Form der Abblaseinrichtung 41.

Mit anderen Worten kann also das sich in diesem Bereich bildende Kondensat K gezielt durch die gerichtete Abblasung aus dem kritischen Bereich entfernt werden. Die sich ausbildende Luftströmung führt das Kondensat nach außen und hält den kritischen Bereich um die Anlegelinie frei von Kondensattropfen. Die Gaskonzentration des Lösungsmittels, einschließlich also der Weichmacher etc. wird durch den Volumenstrom der Abblasung gesenkt, wodurch das Ausmaß der Kondensation verringert wird. Der eingebrachte gasförmige Luftstrom, üblicherweise eingebrachte Luftstrom kann wie bereits angedeutet vorbeheizt werden, um die Kondensation weiter einzudämmen und eine Kondensation und Abscheidung am Maschinenteil zu vermeiden. Typische Temperaturen für den Gas- oder im konkreten Luftstrom sollten beispielsweise zwischen 20°C und 30°C liegen. Die Vorheizung könnte zwischen 50°C und 180°C betragen. Der seitliche Abstand DS der Abblaseinrichtung 41 zur walzenseitigen Unterseite 5a des Schmelzefilms 5 bzw. zur Oberfläche des Walzenmantels 9 sowie die eingeblasene Luftmenge und das Luftvolumen die dabei so vorgewählt werden, dass Instabilitäten beim Anlegen des Schmelzefilms ausgeschlossen sind. Der Abstand der Abblaseinrichtung 41 bzw. der zugehörigen Auslassdüsen 43 zur Anlegelinie 11 sollte beispielsweise zwischen 20 mm und bevorzugt 100 mm liegen.

### 5. Weiteres Ausführungsbeispiel

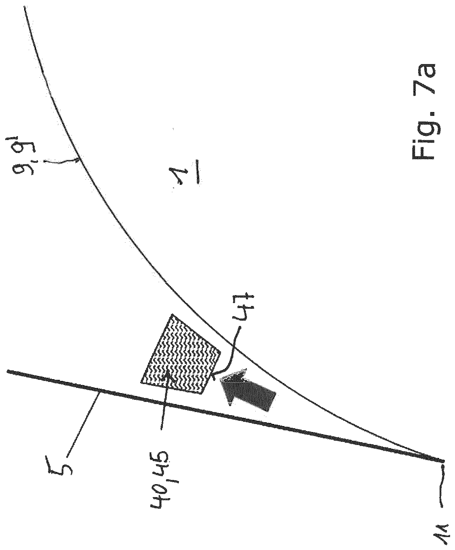

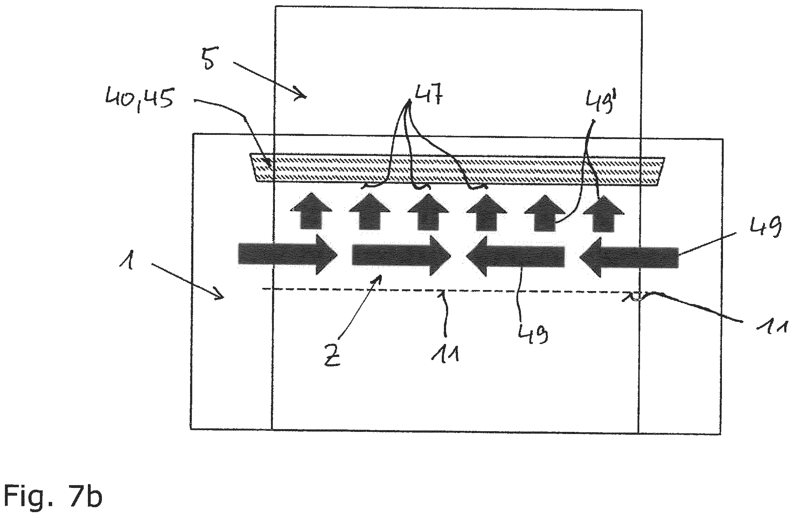

Das Ausführungsbeispiel gemäß Figur 7a und 7b unterscheidet sich von dem vorausgehenden Ausführungsbeispiel dadurch, dass anstelle einer Abblaseinrichtung 41 mit Auslassdüsen 43 eine Absaugeinrichtung 45 mit mehreren über die Länge der Absaugeinrichtung und damit über die Breite des Schmelzefilms 5 angeordneten Absaugdüsen 47 oder mit einer durchgängigen schlitzförmigen Absaugdüse 47 verwendet wird, welche geeignet ist, ein in dem kritischen Bereich Z befindliches Kondensat K anzusaugen und nach außen abzuführen. Die Ausbildung der Absaugeinrichtung 45 und der dazugehörigen Absaugdüsen 47 kann bezüglich der sonstigen Ausbildung und vor allem Anordnung und Halterung identisch oder vergleichbar in der Abblaseinrichtung 41 mit den Auslassdüsen 43 sein.

Mit anderen Worten kann also durch Absaugung das sich bildende Kondensat K längs den Absaug-Pfeilen 49 und 49' aus dem kritischen Bereich oder Zwischenbereich Z entfernt werden, wobei die Luft aus dem Zwischenbereich Z längs der Pfeile 49 und 49' über die Absaugeinrichtung 45 zur Seite hin abströmen kann (wobei hier auch noch luftführende Leitungen, Kanäle oder Schläuche angeschlossen sein können), wodurch dann entsprechend den Pfeilen 49 Frischluft oder Umgebungsluft von außen her mehr oder weniger parallel zur Rotationsachse 8 und/oder zur Anlegelinie 11 zu- oder nachströmen kann. Die sich ausbildende Luftströmung führt das Kondensat ab und hält den kritischen Bereich vor der Anlegelinie frei von Kondensat. Die Gaskonzentration des Lösungsmittels und/oder der Plastifizierungsmittel wird durch die einströmende Umgebungsluft gesenkt, wodurch das Ausmaß der Kondensation verringert wird.

Von daher sind die Strömungspfeile bei dem Ausführungsbeispiel gemäß Figur 7a und 7b genau umgekehrt zu den Strömungspfeilen in dem Ausführungsbeispiel nach Figur 6a und 6b.
Zusätzlich kann die Umgebungstemperatur bzw. die Raumtemperatur erhöht werden, um die Kondensation weiter zu verringern. Typische Umgebungstemperaturen können beispielsweise zwischen 20°C und 50°C liegen. Der Abstand, die Luftmenge und das Luftvolumen können wiederum so gewählt werden, dass wie bei dem vorausgegangenen Ausführungsbeispiel auch Instabilitäten beim Anlegen der Schmelze oder des Schmelzefilms ausgeschlossen sind. Der Abstand der Absaugeinrichtung sollte auch hier etwa 20 mm bis 100 mm betragen. Auch ansonsten wird vom grundsätzlichen Aufbau und/oder der Anordnung der Absaugeinrichtung45 auf das vorausgegangene Ausführungsbeispiel verwiesen.

### 6. Weiteres Ausführungsbeispiel als Kombination der beiden vorausgegangenen Ausführungsbeispiele

An Hand von Figur 8 ist eine schematische Seitendarstellung ähnlich zur Figur 6b bzw. 7b bezüglich einer Kombinationsvariante gezeigt, welche als kombinierte Abblas- und Absaugeinrichtung 46 ausgebildet ist.

Die Anordnung ist vergleichbar der Abblaseinrichtung 41 bzw. der Absaugeinrichtung 45, so wie sie an Hand der vorausgegangenen beiden Ausführungsbeispiele erläutert wurden. Davon abweichend kann die kombinierte Abblas- und Absaugeinrichtung 46 beispielsweise im Inneren zumindest zwei in Längsrichtung der Einrichtung durchgeführte Kanäle umfassen, wobei ein Kanal als Abblaskanal und der andere Kanal als Absaugkanal dient.

In Figur 8 sind an Hand der Pfeile 49 und 49' die Luftströmungen für die Absaugeinrichtung dargestellt. Die Luft strömt bevorzugt von beiden gegenüberliegenden Seitenbereichen in den Zwischenbereich zwischen Film und Walzenoberfläche ein und wird über eine Vielzahl von in Längsrichtung der Absaugeinrichtung versetzt vorgesehenen Absaugdüsen 47 abgesaugt.

Die dünneren Pfeile 45 und 45' in Figur 8 stellen die Strömungsverhältnisse für die Abblaseinrichtung dar, bei der über einen getrennten Kanal in der kombinierten Abblas- und Absaugeinrichtung 46 ein gasförmiges Medium insbesondere Luft zugeführt und über eine Vielzahl von in Längsrichtung der kombinierten Abblas- und Absaugeinrichtung vorgesehenen Auslassdüsen 43 ausströmen und in dem Zwischenbereich Z nach außen hin seitlich abströmen kann.

### 7. Realisierung einer verbesserten Prozessführung

Nachfolgend wird auf die Variante gemäß Figur 9 eingegangen, bei der zwei Kühlwalzen 1 und 1' hintereinander angeordnet sind, so dass der Schmelzefilm über einen Teilumschlingungswinkel um die erste Kühlwalze 1 und anschließend um eine dazu versetzte zweite Kühlwalze 1' geführt wird (wobei beide Kühlwalzen im Abstand parallel zueinander angeordnet sein können). Sofern die Gefahr einer Kondensatbildung auch noch in dem Einzugsbereich zwischen dem Walzenmantel der zweiten Kühlwalze 1' und der dortigen Anlegelinie 11' bestehen sollte, können die vorstehend genannten Maßnahmen auch bezüglich dieser zweiten Kühlwalze 1 umgesetzt werden. Auch auf dieser zweiten der ersten Kühlwalze 1 nachfolgenden Walze muss grundsätzlich mit Defekten gerechnet werden. Von daher kann auch bei der zweiten Walze (oder im gesamten System bei jeder Walze, bei der eine Kondensatbildung zu befürchten ist) eine oder mehrere der vorstehend genannten Maßnahmen eingesetzt werden, um zu verhindern, dass sich Kondensat letztlich in dem Film einprägt.

Um die vorstehend genannten Nachteile (also die Kondensatbildung bei einer zweiten Walze 1' oder Kühlwalze 1') zu vermeiden, kann durch eine entsprechend angepasste Prozessführung versucht werden, die Parameter so zu verändern und/oder zu beeinflussen, die zu einer verminderten Kondensatbildung führen.

Von daher ist im Rahmen der Erfindung eine Steuerungsvorrichtung 10 vorgesehen, in der die entsprechenden ProzessParameter entsprechend eingestellt und/oder verändert oder entsprechende Frequenzen hierfür festgelegt werden können, die letztlich dazu dienen, die Kondensatbildung zu vermeiden oder im relevanten Umfang zu verringern.

So kann beispielsweise durch die Abkühlung des Schmelzefilms der Einfluss des Kondensats auf die Folie begrenzt werden. Denn das zwischen der Schmelzefolie und der Walze eingeschlossene Kondensat kann nur dann zu Foliendefekten führen, solange die walzenseitige Oberfläche des Schmelzefilms noch nicht gänzlich in den erstarrten oder beispielsweise teilkristallinen Zustand übergegangen ist.

Mit anderen Worten kann neben einer der oben geschilderten Maßnahmen an der ersten Kühlwalze durch eine geeignete Einstellung der Prozessparameter, im Hinblick auf eine gewünschte Temperaturführung, das an der der Kühlwalze 1 nachfolgenden Walze oder Kühlwalze 1' auftretende Problem der Kondensatbildung so verringert werden, dass an der Anlegelinie 11 des Films an der zweiten Walze letztlich keine Kondensatbildung mehr auftritt. Mit anderen Worten ist durch eine geeignete Prozessführung unter Herbeiführung einer optimalen Temperaturführung in der Schmelze oder im Schmelzefilm realisierbar, dass letztlich an einer der Kühlwalze nachfolgenden zweiten Walze das erläuterte Problem der Kondensatbildung nicht mehr auftritt und hier keine zusätzlichen weiteren Maßnahmen mehr notwendig sind.

Die Kinetik der Kristallisation bei der Abkühlung des lösemittelhaltigen Schmelzefilms 5 ist dabei vom Lösungsmittelgehalt (Solventgehalt) der Kunststoffmischung abhängig und kann beispielsweise mittels DSC-Messungen ermittelt werden, d.h. im sogenannten "differential scan calorimetry" also einem Gerät zur dynamischen Differenzkalorimetrie.

Die entsprechende kritische Temperatur T_{kritisch} liegt beispielsweise bei Polyethylen (PE) typischerweise zwischen 80°C und 110°C, d.h. vorzugsweise bei einer Temperatur über 85°C, 90°C, 95°C, 100°C oder 105°C. Ebenso liegt die bevorzugte Temperatur vorzugsweise unter 115°C, d.h. insbesondere unter 110°C, 105°C, 100°C, 95°C, 90°C oder 85°C.

Bei anderen Polymeren sind natürlich andere Temperaturbereiche relevant, die eingehalten werden sollten, damit die Schmelze oder Folie, wie erläutert, erstarrt ist. Dabei können, wie erwähnt, auch bei anderen Polymeren die entsprechenden Regelungen in Abhängigkeit der nötigen DSC-Messungen zur Bestimmung des Erstarrungspunktes durchgeführt werden.

Nunmehr kann durch Wahl der entscheidungserheblichen Prozessparameter mittels der Steuerungsvorrichtung 10 die Bedingung so eingestellt und/oder erfüllt werden, damit die Auswirkungen des Kondensats an einer der ersten Kühlwalze 1 nachfolgenden zweiten Walze oder Kühlwalze 1' vermieden werden.

Dies kann beispielsweise durch entsprechende Einstellung oder Vorwahl folgender Prozessparameter erzielt werden:
- durch Einstellung oder Vorgabe oder Regelung einer Verweil- oder Übergabezeit des Schmelzefilms zwischen dem Austritt aus der Flach- oder Extruderdüse 3 bis zum Anlegen auf dem Walzenmantel 9 der ersten Kühlwalze 1 (wodurch erreicht werden kann, dass die der Kühlwalze zugewandt liegende Bereich spätestens beim Auftreffen auf den Walzenmantel der der Kühlwalze 1 nachfolgenden zweiten Kühlwalze 1' bereits abschließend erstarrt ist); und/oder
- durch Einstellung einer entsprechenden Umgebungstemperatur, gegebenenfalls auch durch Vorwahl oder Einstellung einer gewünschten Temperatur für das in dem Zwickelbereich eingeblasene gasförmige Medium, insbesondere in Form einer entsprechend erwärmten Luft; und/oder
- durch Einstellung, Vorgabe oder Regelung einer entsprechenden Walzentemperatur (d.h. Vorwahl der entsprechenden Walzenmantel-Temperatur T_{R}; und/oder
- durch Einstellung, Vorgabe oder Regelung zur Veränderung des Lösungsmittelgehaltes durch Wahl des entsprechenden Volumens- und/oder Gewichtsanteiles an dem Kunststoffmaterial für den Schmelzefilm; und/oder
- durch entsprechende Einstellung, Vorgabe oder Regelung der Schmelzefilm-Dicke.

Durch entsprechende Einstellung oder Vorwahl oder Vorgabe einzelner oder mehrerer der vorstehend genannten Prozessparameter kann erreicht werden, dass die Erstarrung des Schmelzefilms vor Erreichen der Kühlwalzen-Oberfläche der zweiten Kühlwalze 1' abgeschlossen oder in überwiegendem Maße von zumindest mehr als 60%, insbesondere mehr als 70%, 80% und insbesondere mehr als 90% oder 95% oder sogar zu 100% abgeschlossen ist, um damit die Auswirkungen des Kondensats zu verringern oder gar zu vermeiden.

Durch diese Maßnahmen kann das Auftreten von Kondensatdefekten vor allem auf der Schmelzefilm-Unterseite an der zweiten Walze 1' verringert und vor allem ausgeschlossen werden.

Als besonders geeignet hat sich beispielsweise auch die Erwärmung der Walzenmantel-Temperatur T_{R} auf Bereiche erwiesen, die beispielsweise zwischen 65°C und 115°C liegen. Derartige Kühltemperaturen auf der Kühlwalze reichen in der Regel, um eine Kondensation am Anlegepunkt bzw. der Anlegelinie des Schmelzefilms auf dem Mantel der Kühlwalze zu vermeiden.

Sofern der Kühleffekt insgesamt für die Abkühlung des Schmelzefilms nicht genügt, kann dann gegebenenfalls auch eine Ausführungsform gewählt werden, wie sie nur beispielhaft unter Bezugnahme auf Figur 2 wiedergegeben ist.

### Allgemeine Anmerkung

Die Erfindung ist anhand einer Schmelze oder eines sogenannten Schmelze- oder Castfilms 5 erläutert worden, der von einer Düse 3, insbesondere Schlitzdüse 3, beispielsweise einer Extruderdüse 3 auf eine Oberfläche einer Kühlwalze abgegeben wird.

Wie bereits einleitend erläutert wurde, gelten die gemachten Ausführungen aber auch für alle anderen Filme oder Folien 5', bei denen unter bestimmten Bedingungen oder Betriebsbedingungen Stoffe wie insbesondere Lösungsmittel und/oder Plastifizierungsmittel oder etc. unter Bildung eines Kondensats austreten können, vor allem in einem Bereich, bei dem ein entsprechender Film oder eine Folie in einem sich keilförmig verjüngenden Bereich längs einer Anlegelinie auf einen Walzenmantel einer Walze trifft, wobei die Walze als Kühlwalze bezeichnet werden kann, wenn die Walze oder der Walzenmantel oder die Walzenoberfläche kühler ist als die Temperatur des Kunststofffilms.

In all diesen Fällen könnten die erfindungsgemäßen Maßnahmen ergriffen werden, um die Kondensatbildung zu verringern oder, wie beschrieben, mehr oder weniger völlig zu vermeiden. Eine Einschränkung auf eine Schmelze oder Schmelzefilm, insbesondere bei Anlegung auf einer Kühlwalze, ist also im Rahmen der Erfindung nicht vorgesehen.

Ferner wird angemerkt, dass verschiedene Varianten der vorstehenden Erfindung nicht mehr für sich einzeln genommen vorgesehen und realisiert werden können, sondern auch kumulativ.

So kann beispielsweise die anhand des erläuterten Ausführungsbeispiels verwendete Abdeckmatte 21 (z.B. in Form einer Abdeckung, einer Plane oder eines Vlieses) oder einer Abdeckwand 21' nicht nur bei einer im Rahmen des ersten Ausführungsbeispieles erläuterten Veränderung der Prozessparameter, sondern beispielsweise auch bei Verwendung einer Heizeinrichtung und insbesondere einer keilförmigen Heizeinrichtung 31, einer Abblaseinrichtung 41 oder einer Absaugeinrichtung 45 verwendet werden.

Auch die Abblaseinrichtung kann zusätzlich zu einer Heizeinrichtung vorgesehen sein, oder aber auch zusätzlich zu der Abschirmmatte 21 oder der Abdeckwand 21'. Schließlich kann die Abblaseinrichtung, eine Heizeinrichtung und die Abschirmmatte und/oder die Deckwand verwendet werden, um eine Kondensatabscheidung entweder zu vermeiden oder so abzuleiten, dass sich abgeschiedenes Kondensat nicht in den Schmelzefilm einprägen kann. Schließlich kann auch die erwähnte saugfähige Materialschicht zusätzlich bei allen Ausführungsbeispielen noch ergänzt und verwendet werden, die bevorzugt im Zusammenhang mit einer festen Abschirmwand 21', grundsätzlich aber auch bei Verwendung einer Abschirmmatte 21 eingesetzt werden könnte. Gleiches gilt auch für die Ausbildung einer Ablaufrinne im Zusammenhang mit der erläuterten Abdeckeinrichtung 19.

In all den Fällen wird also eine vorhandene Kondensatabscheidung unwirksam gemacht und/oder durch Verwendung einer Heizeinrichtung oder anderer Maßnahmen wie einer saugfähigen Schicht sichergestellt, dass sich abgeschiedenes Kondensat bei Verwendung einer Heizeinrichtung überhaupt nicht niederschlagen kann, weil die Temperaturen zu hoch sind.

Schließlich wird auch erwähnt, dass sich die erläuterten Einrichtungen bevorzugt zumindest über die gesamte Breite des Schmelzefilms erstrecken, vorzugsweise aber über zumindest ein gewisses axiales Maß darüber hinaus. Bevorzugt sollen die entsprechenden Einrichtungen sich über zumindest 60 % der Gesamtbreite des Films erstrecken, wobei diese Mindesterstreckung auch mehr als 70 %, mehr als 80 % und mehr als 90 % ausmachen kann. Natürlich können die Einrichtungen aber auch länger als die Gesamtbreite des Films sein. Mit anderen Worten sollen die erwähnten Einrichtungen letztlich über die Gesamtbreite des Schmelzefilms wirksam sein, um keine nachteiligen Effekte zu erzeugen.

Die erwähnten, im Rahmen der Erfindung zur Verbesserung führenden Prozessparameter, können zusätzlich aber auch bei Verwendung der erläuterten Heizeinrichtung 31, der Abblaseinrichtung 41 oder der Absaugeinrichtung 45 vorgesehen sein.

Schließlich kann auch die Abblaseinrichtung 41 oder die Absaugeinrichtung 45 zusätzlich mit einer Heizeinrichtung versehen sein, die anhand des erläuterten Heizkeiles 31' beschriebenen Vorteile zu erreichen.

Allein diese Beispiele zeigen, dass vom Grundsatz her einzelne oder alle Maßnahmen miteinander kombiniert werden können, sofern ihre Funktionsweisen sich nicht gegenseitig widersprechen und der Schutzumfang der anhängenden Ansprüche nicht verlassen wird. Dass sogar die Abblaseinrichtung und die Absaugeinrichtung miteinander kombiniert werden können, ist anhand eines separaten Ausführungsbeispiels unter Bezugnahme auf Figur 8 erläutert worden.

## Patentansprüche

1. Verfahren zur Herstellung eines monoaxial oder biaxial gereckten Kunststofffilms, insbesondere als Separator-Folie für Batterien oder Akkumulatoren, mit folgenden Merkmalen:
- ein Schmelze- oder Kunststofffilm (5, 5') wird einer Kühlwalze (1, 1') zugeführt und längs einer Anlegelinie (11, 11') auf den Walzenmantel (9) der Kühlwalze (1, 1') angelegt, von wo aus der Schmelze- oder Kunststofffilm zumindest über einen Teil-Umschlingungswinkel in Rotationsrichtung (7) der Kühlwalze (1, 1') weiterbefördert wird,
- in dem sich zur Anlegelinie (111, 11') keilförmig verjüngenden Zwischenraum (Z) zwischen dem Schmelze- oder Kunststofffilm (5, 5') und dem dazu beabstandeten Walzenmantel (9) oder der dazu beabstandeten Walzenoberfläche (9') der Kühlwalze (1, 1') wird zumindest eine Einrichtung zur Vermeidung eines Niederschlages von Kondensat (K) in dem Zwischenraum (Z) verwendet, die so ausgebildet ist, dass ein Niederschlag von Kondensat (a) auf der dem Walzenmantel (9) zugewandt liegenden Unterseite (5a) des Schmelze- oder Kunststofffilms (5, 5') oder auf dem Walzenmantel (9) der Kühlwalze (1, 1') durch Verwendung einer Abdeck- oder Abschirmeinrichtung (19) vermieden wird,
**gekennzeichnet durch** die folgenden weiteren Merkmale:
- in dem Zwischenbereich (Z) wird eine Abdeck- oder Abschirmeinrichtung (19) in Form einer Abschirmmatte (21, 21") und/oder in Form einer Abschirmwand (21') verwendet, die gegenüber der rotierenden Kühlwalze (1, 1') nicht-rotierend und/oder ortsfest gehalten wird, wobei die Abschirmmatte (21, 21") und/oder die Abschirmwand (21') in einem Teilumfangsbereich auf dem Walzenmantel (9) aufliegt und sich in Längsrichtung der Kühlwalze (1, 1') zumindest im Bereich des Schmelze- oder Kunststofffilms (5, 5') und vorzugsweise darüber hinaus erstreckt,
- wobei die Abschirmmatte (21, 21") und/oder die Abschirmwand (21') so angeordnet wird, dass sie in einem Abstand (A) vor der Anlegelinie (11, 11') endet, und dass die Kühlwalze (1, 1') unter der Abschirmmatte (21, 21") und/oder der Abschirmwand (21') in Rotationsrichtung rotiert.

2. Verfahren nach Anspruch 1, **dadurch gekennzeichnet, dass** eine flexible Abschirmmatte (21, 21") verwendet wird, die aus
a) nicht-porösen, nicht-perforierten, kondensat- oder wasser-undurchlässigem und/oder flüssigkeitsdichtem Material besteht, oder
b) einem gewebeförmigen, poröse, perforierten, nichtwasserdichtem und/oder saugfähigem Material besteht.

3. Verfahren nach Anspruch 1 oder 2, **dadurch gekennzeichnet, dass** eine Abschirmmatte (21, 21") verwendet wird, die nach Art einer Abdeckung oder Plane oder nach Art eines Vlieses gebildet ist und/oder aus einem oder mehreren der folgenden Materialien besteht und eines oder mehrere der nachfolgenden Materialien umfasst, nämlich: Gewebe, Papier, Leder, Non-Woven/Vlies, Polymerschäume insbesondere in Form von Neopren/Neoprenimitat, Membranen, Polyester, Cellulose insbesondere auch in Form von Baumwolle und deren Derivaten, Polypropylen, Polyester/Polyamid, Polyethersulfone/Polyamid, Gummi oder Moosgummi (Schaum) und/oder Kunstleder.

4. Verfahren nach Anspruch 3, **dadurch gekennzeichnet, dass** eine Abschirmmatte (21, 21") und/oder eine Abschirmwand (21') verwendet wird, die eine Dicke vorzugsweise zwischen 10 µm bis 4 mm und/oder ein Flächengewicht vorzugsweise zwischen 30 g/m² bis 100 g/m² aufweist.

5. Verfahren nach einem der Ansprüche 1 bis 4, **dadurch gekennzeichnet, dass** die im Abstand (A) zur Anlegelinie (11, 11') endende Abdeckeinrichtung (19) in Form einer Abdeckmatte (21, 21") oder in Form einer festen Abdeckwand (21') mit einer glatten Schnittkante (21b) unter Vermeidung von vorstehenden und/oder losen Einzelfasern verwendet wird.

6. Verfahren nach einem der Ansprüche 1 bis 5, **dadurch gekennzeichnet, dass** eine Abschirmmatte (21, 21") oder eine Abschirmwand (21') verwendet und so angeordnet wird, dass deren Schnittkante (21b) in einem Abstand von 2 mm bis 30 mm in Rotationsrichtung der Kühlwalze (1, 1') betrachtet vor der Anlegelinie (11, 11') endet.

7. Vorrichtung zur Herstellung eines monoaxial oder biaxial gereckten Kunststofffilms, insbesondere als Separator-Folie für Batterien oder Akkumulatoren, mit folgenden Merkmalen:
- es ist eine Kühlwalze (1, 1') vorgesehen, der ein Schmelze- oder Kunststofffilm (5, 5') zugeführt und längs einer Anlegelinie (11, 11') auf dem Walzenmantel der Kühlwalze (1, 1') angelegt wird, von woraus der Schmelze- und/oder Kunststofffilm (5, 5') zumindest über einen des Teil-Umschlingungswinkels in Rotationsrichtung (7) der Kühlwalze (1, 1') weiter beförderbar ist,
- die Geometrie des Zuführens des Schmelze- und/oder Kunststofffilms (5, 5') bis zur Anlegelinie (11) auf den Walzenmantel (9) erfolgt derart, dass zwischen dem Schmelze- und/oder Kunststofffilm (5, 5') und dem dazu beabstandeten Walzenmantel (9) und der Kühlwalze (1, 1') ein sich zur Anlegelinie (11, 11') hin keilförmig verjüngender Zwischenraum (Z) gebildet ist,
- es ist ferner zumindest eine Einrichtung zur Vermeidung eines Niederschlags von Kondensat (K) auf der zum Walzenmantel (9) zugewandt liegenden Unterseite (5a) des Schmelze- oder Kunststofffilms (5, 5') oder auf dem Walzenmantel (9) oder der Walzenoberfläche (9') der Kühlwalze (1, 1') in dem Zwischenraum (Z) vorgesehen, und
- der Zwischenraum (Z) ist so ausgestaltet, dass ein Niederschlag von Kondensat (a) auf der dem Walzenmantel (9) zugewandt liegenden Unterseite (5a) des Schmelze- oder Kunststofffilms (5, 5') und/oder auf dem Walzenmantel (9) der Kühlwalze (1, 1') mittels einer Abdeck- oder Abschirmeinrichtung (19) vermieden ist,
**gekennzeichnet durch** die folgenden weiteren Merkmale:
- in dem Zwischenbereich (Z) ist eine Abschirm- oder Abdeckeinrichtung (19) in Form einer Abschirmmatte (21, 21") und/oder in Form einer Abschirmwand (21') vorgesehen, die gegenüber der rotierenden Kühlwalze (1, 1') nicht-rotierend und/oder ortsfest gehalten ist, wobei die Abschirmmatte (21) oder die Abschirmwand (21') in einem Teilumfangsbereich auf dem Walzenmantel (9) aufliegt und sich in Längsrichtung der Kühlwalze (1, 1') zumindest im Bereich des Schmelze- oder Kunststofffilms (5, 5') und vorzugsweise darüber hinaus erstreckt, und
- die Abschirmmatte (21, 21") und/oder die Abschirmwand (21') ist so angeordnet, dass sie in einem Abstand (A) vor der Anlegelinie (11, 11') endet, und dass die Kühlwalze (1, 1') unter der Abschirmmatte (21, 21") in Rotationsrichtung rotiert.

8. Vorrichtung nach Anspruch 7, **dadurch gekennzeichnet, dass** die Abdeck- oder Abschirmeinrichtung (19) aus einer flexiblen Abschirmmatte (21, 21") besteht oder diese umfasst, die aus
a) nicht-porösen, nicht-perforierten, kondensat- oder wasser-undurchlässigen und/oder flüssigkeitsdichten Material besteht, oder
b) einem gewebeförmigen, porösen, perforierten, nicht-wasserdichten und/oder saugfähigen Material besteht.

9. Vorrichtung nach Anspruch 7 oder 8, **dadurch gekennzeichnet, dass** die Abschirmmatte (21, 21"), die nach Art einer Abdeckung oder Plane oder nach Art eines Vlieses gebildet ist und/oder aus einem oder mehreren der folgenden Materialien besteht und eines oder mehrere der nachfolgenden Materialien umfasst, nämlich: Gewebe, Papier, Leder, Non-Woven/Vlies, Polymerschäume insbesondere auch in Form von Neopren/Neoprenimitat, Membranen, Polyester, Cellulose einschließlich Baumwolle und deren Derivate, Polypropylen, Polyester/Polyamid, Polyethersulfone/Polyamid, Gummi oder Moosgummi (Schaum) und/oder Kunstleder.

10. Vorrichtung nach einem der Ansprüche 7 bis 9, **dadurch gekennzeichnet, dass** die Abschirmmatte (21, 21") oder die Abschirmwand (21') eine Dicke vorzugsweise zwischen 10 µm bis 4 mm und/oder ein Flächengewicht vorzugsweise zwischen 30 g/m² bis 100 g/m² aufweist.

11. Vorrichtung nach einem der Ansprüche 7 bis 10, **dadurch gekennzeichnet, dass** die im Abstand (A) zur Anlegelinie (11, 11') endende Abschirmmatte (21, 21") und/oder die Abschirmwand (21') mit einer glatten Schnittkante (21b) unter Vermeidung von vorstehenden Einzelfasern verwendet wird.

12. Vorrichtung nach einem der Ansprüche 7 bis 11, **dadurch gekennzeichnet, dass** die Abschirmmatte (21) und/oder die Abschirmwand (21') so angeordnet ist, dass deren Schnittkante (21b) in einem Abstand von 2 mm bis 30 mm in Rotationsrichtung der Kühlwalze (1, 1') betrachtet vor der Anlegelinie (11, 11') endet.

13. Vorrichtung nach einem der Ansprüche 7 bis 12, **dadurch gekennzeichnet, dass** eine Luftumwälzeinrichtung (40) vorgesehen ist, worüber die kondensatbelastete Luft in dem Zwischenraum (Z) entfernt und durch kondensatfreie Frischluft ersetzt wird.

14. Vorrichtung nach Anspruch 13, **dadurch gekennzeichnet, dass** die Luftumwälzeinrichtung (40) in Form einer Abblaseinrichtung (41) vorgesehen ist, die in deren Längsrichtung mit zumindest einer oder mehreren versetzt zueinander liegenden Austrittsdüsen (43) versehen ist, worüber von außen Frisch- oder Umgebungsluft angesaugt und über der zumindest eine oder die mehreren Austrittsdüsen (43) in den Zwischenraum (Z) eingeblasen wird, wodurch die dort befindliche kondensatbelastete Luft zu den gegenüberliegenden Austrittsseiten des Zwischenbereiches (Z) abgeblasen wird.

15. Vorrichtung nach Anspruch 13 oder 14, **dadurch gekennzeichnet, dass** die Luftumwälzeinrichtung (40) in Form einer Absaugeinrichtung (45) oder in Form einer Absaug- und Abblaseinrichtung (45, 41) vorgesehen ist, die in deren Längsrichtung mit zumindest einer oder mehreren versetzt zueinander liegenden Absaugdüsen oder -öffnungen (47) versehen ist, worüber die kondensatbelastete Luft aus dem Zwischenraum (Z) abgesaugt wird, wodurch an den gegenüberliegenden Eintrittsenden Frischluft oder Umgebungsluft zugeführt wird.

## Claims

1. A method for producing a monoaxially or biaxially stretched plastic film, in particular as a separator film for batteries or accumulators, with the following features:
- a melt film or plastic film (5, 5') is fed to a cooling roller (1, 1') and placed along a contact line (11, 11') onto the roller jacket (9) of the cooling roller (1, 1'), from where the melt film or plastic film is conveyed at least over a partial wrap angle in the rotational direction (7) of the cooling roller (1, 1'),
- in the intermediate space (Z) tapering in a wedge shape towards the contact line (111, 11') between the melt film or plastic film (5, 5') and the roller jacket (9) spaced apart therefrom or the roller surface (9') of the cooling roller (1, 1') spaced apart therefrom, at least one device for preventing precipitation of condensate (K) in the intermediate space (Z) is used and is designed such that a precipitation of condensate (a) on the underside (5a) of the melt film or plastic film (5, 5') facing the roller jacket (9) or on the roller jacket (9) of the cooling roller (1, 1') is prevented by using a cover device or shielding device (19)
**characterised by** the following features:
- in the intermediate region (Z) a cover device or shielding device (19) in the form of a shielding mat (21, 21") and/or in the form of a shielding wall (21') is used which is held in a non-rotating manner and/or in place with respect to the rotating cooling roller (1, 1'), the shielding mat (21, 21") and/or the shielding wall (21') resting on the roller jacket (9) in a partial circumferential area and preferably extending in the longitudinal direction of the cooling roller (1, 1') at least in the area of the melt film or plastic film (5, 5') and preferably beyond,
- wherby the shielding mat (21, 21") and/or the shielding wall (21') is arranged such that it terminates at a distance (A) in front of the contact line (11, 11') and such that the cooling roller (1, 1') rotates beneath the shielding mat (21, 21") and/or the shielding wall (21') in the rotational direction.

2. The method according to claim 1, **characterised in that** a flexible shielding mat (21, 21") is used which comprises
a) non-porous, non-perforated, condensate-impermeable or water-impermeable and/or liquid-tight material, or
b) a fabric-like, porous, perforated, non-water-tight and/or absorbent material.

3. The method according to claim 1 or 2, **characterised in that** a shielding mat (21, 21") is used which is formed like a cover or covering or like a nonwoven fabric and/or comprises one or more of the following materials and includes one or more of the following materials, namely: fabrics, paper, leather, non-wovens/non-woven fabric, polymer foams, in particular in the form of neoprene/imitation neoprene, membranes, polyester, cellulose in particular also in the form of cotton and its derivatives, polypropylene, polyester/polyamide, polyethersulfones/polyamide, rubber or foam rubber (foam) and/or synthetic leather.

4. The method according to claim 3, **characterised in that** a shielding mat (21, 21") and/or a shielding wall (21') is used which preferably has a thickness between 10 µm to 4 mm and/or a mass per unit area preferably between 30 g/m² to 100 g/m².

5. The method according to one of claims 1 through 4, **characterised in that** the cover device (19) terminating at a distance (A) from the contact line (11, 11') in the form of a cover mat (21, 21") or in the form of a solid cover wall (21') is used with a smooth cut edge (21b) while avoiding protruding and/or loose individual fibres.

6. The method according to one of claims 1 through 5, **characterised in that** a shielding mat (21, 21") or a shielding wall (21') is used and is arranged such that its cut edge (21b) terminates at a distance of 2 mm to 30 mm as viewed in front of the contact line (11, 11') in the rotational direction of the cooling roller (1, 1').

7. A device for producing a monoaxially or biaxially stretched plastic film, in particular as a separator film for batteries or accumulators, with the following features:
- a cooling roller (1, 1') is provided, to which a melt film or plastic film (5, 5') is fed and which is placed along a contact line (11, 11') on the roller jacket of the cooling roller (1, 1'), from where the melt film and/or plastic film (5, 5') can be conveyed further at least via one of the partial wrap angles in the rotational direction (7) of the cooling roller (1, 1'),
- the geometry of the supply of the melt film and/or plastic film (5, 5') to the contact line (11) on the roller jacket (9) is such that an intermediate space (Z) tapering in a wedge shape towards the contact line (11, 11') is formed between the melt film and/or plastic film (5, 5') and the roller jacket (9) and the cooling roller (1, 1') spaced apart therefrom,
- there is also at least one device for preventing condensate (K) from precipitating on the underside (5a) of the melt film or plastic film (5, 5') facing the roller jacket (9) or on the roller jacket (9) or the roller surface (9') of the cooling roller (1, 1') provided in the intermediate space (Z), and
- the intermediate space (Z) is provided such that a precipitation of condensate (a) on the underside (5a) of the melt film or plastic film (5, 5') facing the roller jacket (9) and/or on the roller jacket (9) of the cooling roller (1, 1') is prevented by means of a cover device or shielding device (19),
**characterised by the following features:**
- in the intermediate region (Z) a shielding device or cover device (19) in the form of a shielding mat (21, 21") and/or in the form of a shielding wall (21') is provided which is held in a non-rotating manner and/or is held in place relative to the rotating cooling roller (1, 1') , whereby the shielding mat (21) or shielding wall (21') is resting on the roller jacket (9) in a partial circumferential region and preferably extending in the longitudinal direction of the cooling roller (1, 1') at least in the region of the melt film or plastic film (5, 5') and preferably beyond, and
- the shielding mat (21, 21") and/or the shielding wall (21') is arranged such that it terminates at a distance (A) in front of the contact line (11, 11') and that the cooling roller (1, 1') rotates in the rotational direction beneath the shielding mat (21, 21").

8. The device according to claim 7, **characterised in that** the cover device or shielding device (19) comprises or includes a flexible shielding mat (21, 21") comprising
a) non-porous, non-perforated, condensate-impermeable or water-impermeable and/or liquid-tight material, or
b) a fabric-like, porous, perforated, non-water-tight and/or absorbent material.

9. The device according to claim 7 or 8, **characterised in that** the shielding mat (21, 21"), which is formed in the manner of a cover or covering or in the manner of a nonwoven fabric and/or comprises one or more of the following materials and includes one or more of the following materials, specifically: fabrics, paper, leather, nonwovens/non-woven fabric, polymer foams, in particular also in the form of neoprene/imitation, membranes, polyester, cellulose including cotton and its derivatives, polypropylene, polyester/polyamide, polyethersulfones/polyamide, rubber or foam rubber (foam) and/or synthetic leather.

10. The device according to one of claims 7 through 9, **characterised in that** the shielding mat (21, 21") or shielding wall (21') has a thickness preferably between 10 µm to 4 mm and/or mass per unit area preferably between 30 g/m² to 100 g/m².

11. The device according to one of claims 7 through 10, **characterised in that** the shielding mat (21, 21") and/or the shielding wall (21') terminating at a distance (A) from the contact line (11, 11') is used with a smooth cut edge (21b), avoiding protruding single fibres.

12. The device according to one of claims 7 through 11, **characterised in that** the shielding mat (21) and/or the shielding wall (21') is arranged such that its cut edge (21b) terminates at a distance of 2 mm to 30 mm in the rotational direction of the cooling roller (1, 1') as viewed in front of the contact line (11, 11').

13. The device according to one of claims 7 through 12, **characterised in that** an air circulation device (40) is provided, via which the condensate-laden air in the intermediate space (Z) is removed and replaced by condensate-free fresh air.

14. The device according to claim 13, **characterised in that** the air circulation device (40) is provided in the form of a blowing device (41) which is provided in the longitudinal direction with at least one or more outlet nozzles (43) offset to one another and via which fresh or ambient air from the outside is suctioned in and blown via the at least one or more outlet nozzles (43) into the intermediate space (Z), so that the condensate-laden air there is blown out to the opposing outlet sides of the intermediate region (Z).

15. The device according to claim 13 or 14, **characterised in that** the air circulation device (40) is provided in the form of a suction device (45) or in the form of a suction and blowing device (45, 41) which in its longitudinal direction is provided with at least one or more suction nozzles or openings (47) offset to one another and via which the condensate-laden air is suctioned off from the intermediate space (Z), so that fresh air or ambient air is supplied at the opposing inlet ends.

## Revendications

1. Procédé de fabrication d'une feuille de plastique à étirage uniaxial ou biaxial, servant notamment de feuille séparatrice pour batteries ou accumulateurs, présentant les particularités suivantes :
- une feuille de matière fondue ou de plastique (5, 5') est acheminée vers un rouleau de refroidissement (1, 1') et est appliquée le long d'une ligne d'application (11, 11') sur la chemise (9) du rouleau de refroidissement (1, 1'), à partir d'où la feuille de matière fondue ou de plastique continue sa trajectoire au moins sur un angle d'enroulement partiel dans le sens de la rotation (7) du rouleau de refroidissement (1, 1'),
- on utilise, dans l'espace interstitiel (Z) qui va en s'amenuisant en forme de coin vers la ligne d'application (111, 11') entre la feuille de matière fondue ou de plastique (5, 5') et la chemise (9) ou la surface (9') du rouleau de refroidissement (1, 1') qui en est écartée, au moins un dispositif visant à empêcher le dépôt d'un condensat (K) dans ledit espace interstitiel (Z), lequel dispositif est conçu de manière à éviter tout dépôt de condensat (a) sur la face inférieure (5a) de la feuille de matière fondue ou de plastique (5, 5') tournée vers la chemise de rouleau (9) ou bien sur ladite chemise (9) du rouleau de refroidissement (1, 1'), grâce à un dispositif de couverture ou de protection (19),
**caractérisé par** les autres particularités suivantes :
- on utilise, dans l'espace intermédiaire (Z), un dispositif de couverture ou de protection (19) sous la forme d'une natte de protection (21, 21") et/ou d'une paroi de protection (21') qui sont retenues non rotatives et/ou fixes par rapport au rouleau de refroidissement (1, 1') rotatif, ladite natte de protection (21, 21") et/ou ladite paroi de protection (21') étant appliquées dans une zone circonférentielle partielle sur la chemise de rouleau (9) et s'étendant dans le sens longitudinal du rouleau de refroidissement (1, 1') au moins à proximité de la feuille de matière fondue ou de plastique (5, 5') et de préférence au-delà de celle-ci,
- la natte de protection (21, 21") et/ou la paroi de protection (21') sont agencées de manière à se terminer à l'intérieur d'un écart (A) en amont de la ligne d'application (11, 11'), et de telle manière que le rouleau de refroidissement (1, 1'), sous la natte de protection (21, 21") et/ou la paroi de protection (21'), tourne dans le sens de la rotation.

2. Procédé selon la revendication 1, **caractérisé en ce qu'**on utilise une natte de protection (21, 21") souple composée
a) d'une matière non poreuse, non perforée, non perméable aux condensats ou à l'eau et/ou imperméable aux liquides, ou
b) d'une matière tissée, poreuse, perforée, perméable à l'eau et/ou absorbante.

3. Procédé selon la revendication 1 ou 2, **caractérisé en ce qu'**on utilise une natte de protection (21, 21") conçue à la manière d'une couverture ou bâche ou à la manière d'un non-tissé et/ou consistant en un ou plusieurs des matériaux suivants et comprenant une ou plusieurs des matières suivantes, à savoir : tissu, papier, cuir, non-tissé/intissé, mousses à base de polymère notamment aussi sous la forme de membranes en néoprène/imitation néoprène, polyester, cellulose aussi notamment sous la forme de coton et ses dérivés, polypropylène, polyester/polyamide, caoutchouc ou caoutchouc expansé (mousse) et/ou cuir artificiel.

4. Procédé selon la revendication 3, **caractérisé en ce qu'**on utilise une natte de protection (21, 21") et/ou une paroi de protection (21') présentant une épaisseur comprise de préférence entre 10 µm et 4 mm et/ou un grammage compris de préférence entre 30 g/m² et 100 g/m².

5. Procédé selon l'une des revendications 1 à 4, **caractérisé en ce que** le dispositif de couverture (19) se terminant à l'intérieur de l'écart (A) par rapport à la ligne d'application (11, 11') est utilisé sous la forme d'une natte de couverture (21, 21") ou sous la forme d'une paroi de couverture solide (21') présentant une arête (21b) lisse, en évitant les fibres saillantes et/ou libres.

6. Procédé selon l'une des revendications 1 à 5, **caractérisé en ce qu'**on utilise une natte de protection (21, 21") ou une paroi de protection (21') et qu'on l'agence de telle manière que son arête (21b) se termine à l'intérieur d'un écart allant de 2 mm à 30 mm, vu dans le sens de la rotation du rouleau de refroidissement (1, 1') en amont de la ligne d'application (11, 11').

7. Dispositif de fabrication d'une feuille de plastique à étirage uniaxial ou biaxial, servant notamment de feuille séparatrice pour batteries ou accumulateurs, présentant les particularités suivantes :
- il est prévu un rouleau de refroidissement (1, 1') vers lequel une feuille de matière fondue ou de plastique (5, 5') est acheminée et appliquée le long d'une ligne d'application (11, 11') sur la chemise du rouleau de refroidissement (1, 1'), à partir d'où la feuille de matière fondue et/ou de plastique (5, 5') continue sa trajectoire au moins sur un angle d'enroulement partiel dans le sens de la rotation (7) du rouleau de refroidissement (1, 1'),
- l'acheminement de la feuille de matière fondue et/ou de plastique (5, 5') jusqu'à la ligne d'application (11) sur la chemise de rouleau (9) s'effectue selon une géométrie suivant laquelle il se forme un espace interstitiel (Z) qui va en s'amenuisant en forme de coin vers la ligne d'application (11, 11'), entre la feuille de matière fondue et/ou de plastique (5, 5') et la chemise (9) du rouleau de refroidissement (1, 1') qui en est écartée,
- il est en outre prévu, dans ledit espace interstitiel (Z), au moins un dispositif visant à empêcher le dépôt d'un condensat (K) sur la face inférieure (5a) de la feuille de matière fondue ou de plastique (5, 5') tournée vers la chemise de rouleau (9), ou sur ladite chemise de rouleau (9) ou ladite surface (9') du rouleau de refroidissement (1, 1'), et
- ledit espace interstitiel (Z) est conçu de manière à éviter tout dépôt de condensat (a) sur la face inférieure (5a) de la feuille de matière fondue ou de plastique (5, 5') tournée vers la chemise de rouleau (9) et/ou sur ladite chemise (9) du rouleau de refroidissement (1, 1'), par le biais d'un dispositif de couverture ou de protection (19),
**caractérisé par** les autres particularités suivantes :
- il est prévu, dans l'espace intermédiaire (Z), un dispositif de couverture ou de protection (19) sous la forme d'une natte de protection (21, 21") et/ou d'une paroi de protection (21') qui sont retenues non rotatives et/ou fixes par rapport au rouleau de refroidissement (1, 1') rotatif, ladite natte de protection (21) ou la paroi de protection (21') étant appliquée dans une zone circonférentielle partielle sur la chemise de rouleau (9) et s'étendant dans le sens longitudinal du rouleau de refroidissement (1, 1') au moins à proximité de la feuille de matière fondue ou de plastique (5, 5') et de préférence au-delà de celle-ci, et
- la natte de protection (21, 21") et/ou la paroi de protection (21') sont agencées de manière à se terminer à l'intérieur d'un écart (A) en amont de la ligne d'application (11, 11'), et de telle manière que le rouleau de refroidissement (1, 1'), sous la natte de protection (21, 21"), tourne dans le sens de la rotation.

8. Dispositif selon la revendication 7, **caractérisé en ce que** le dispositif de couverture ou de protection (19) se compose d'un natte de protection (21, 21") souple ou comprend cette dernière, laquelle se compose
a) d'une matière non poreuse, non perforée, non perméable aux condensats ou à l'eau et/ou imperméable aux liquides, ou
b) d'une matière tissée, poreuse, perforée, perméable à l'eau et/ou absorbante.

9. Dispositif selon la revendication 7 ou 8, **caractérisé en ce que** la natte de protection (21, 21") est conçue à la manière d'une couverture ou bâche ou à la manière d'un non-tissé et/ou consiste en un ou plusieurs des matériaux suivants et comprend une ou plusieurs des matières suivantes : tissu, papier, cuir, non-tissé/intissé, mousses à base de polymère notamment aussi sous la forme de membranes en néoprène/imitation néoprène, polyester, cellulose y compris coton et ses dérivés, polypropylène, polyester/polyamide, caoutchouc ou caoutchouc expansé (mousse) et/ou cuir artificiel.

10. Dispositif selon l'une des revendications 7 à 9, **caractérisé en ce que** la natte de protection (21, 21") ou la paroi de protection (21') présente une épaisseur comprise de préférence entre 10 µm et 4 mm et/ou un grammage compris de préférence entre 30 g/m² et 100 g/m².

11. Dispositif selon l'une des revendications 7 à 10, **caractérisé en ce que** la natte de protection (21, 21") et/ou la paroi de protection (21') utilisées, se terminant à l'intérieur de l'écart (A) par rapport à la ligne d'application (11, 11'), présentent une arête (21b) lisse, en évitant les fibres saillantes.

12. Dispositif selon l'une des revendications 7 à 11, **caractérisé en ce que** la natte de protection (21) et/ou la paroi de protection (21') sont agencées de telle manière que leur arête (21b) se termine à l'intérieur d'un écart allant de 2 mm à 30 mm, vu dans le sens de la rotation du rouleau de refroidissement (1, 1') en amont de la ligne d'application (11, 11').

13. Dispositif selon l'une des revendications 7 à 12, **caractérisé en ce qu'**il est prévu un dispositif de circulation d'air (40) permettant d'éliminer l'air chargé de condensat présent dans l'espace interstitiel (Z) et de le remplacer par de l'air frais exempt de condensat.

14. Dispositif selon la revendication 13, **caractérisé en ce que** le dispositif de circulation d'air (40) est prévu sous la forme d'un dispositif d'évacuation d'air (41) doté, dans son sens longitudinal, d'au moins une ou de plusieurs buses de sortie (43) décalées les unes des autres, par lesquelles de l'air frais ou environnant est aspiré depuis l'extérieur et introduit dans l'espace interstitiel (Z) grâce à l'au moins une ou aux plusieurs buses de sortie (43), moyennant quoi l'air chargé de condensat qui s'y trouve est évacué vers les côtés extérieurs opposés de l'espace intermédiaire (Z).

15. Dispositif selon la revendication 13 ou 14, **caractérisé en ce que** le dispositif de circulation d'air (40) est prévu sous la forme d'un dispositif d'aspiration (45) ou sous la forme d'un dispositif d'aspiration et d'évacuation d'air (45, 41) doté, dans son sens longitudinal, d'au moins une ou de plusieurs buses ou ouvertures d'aspiration (47) décalées les unes des autres, par lesquelles l'air chargé de condensat est aspiré hors de l'espace interstitiel (Z), moyennant quoi de l'air frais ou environnant est apporté aux extrémités d'entrée opposées.
